# EUROPEAN PATENT APPLICATION

(11) **EP 4 661 450 A1**
(43) Date of publication of application: **10.12.2025**
(21) Application number: 24771050.2
(22) Date of filing: 23.01.2024
(51) Int. Cl.: H04W 4/90, H04W 4/02, H04W 4/12, H04W 76/50, H04W 64/00, G01S 19/14, G08B 21/02, G08B 25/01, H04W 84/06

(54) **ELECTRONIC DEVICE AND METHOD FOR SENDING MESSAGE TO SATELLITE**

(30) Priority: 13.03.2023 KR 20230032329; 19.04.2023 KR 20230051382
(71) Applicant: Samsung Electronics Co., Ltd., Suwon-si, Gyeonggi-do 16677 (KR)
(72) Inventor: LEE, Junghun, Suwon-si, Gyeonggi-do 16677 (KR); KWON, Dongki, Suwon-si, Gyeonggi-do 16677 (KR); KIM, Hyunil, Suwon-si, Gyeonggi-do 16677 (KR); PARK, Sungmin, Suwon-si, Gyeonggi-do 16677 (KR); HAN, Yonggil, Suwon-si, Gyeonggi-do 16677 (KR)
(74) Representative: Gulde & Partner
(86) International application number: PCT/KR2024/001091
(87) International publication number: WO 2024/191048

(57) **Abstract**

This electronic device may comprise: a display; a sensor; a communication circuit; at least one processor comprising a processing circuit; and a memory for storing instructions and comprising one or more storage media. The electronic device, on the basis of receiving an input for sending a message to a satellite, may send the message via the communication circuit. The electronic device, during a time period for a reference transfer rate of the message, may display, on the display, a first visual object for indicating the transfer rate of the message according to the elapsed time. The electronic device, after the time period, may display, on the display, a second visual object for indicating that the message has been sent, on the basis of receiving a confirmation signal for the message from the satellite via the communication circuit.

## Description

### [Technical Field]

The following descriptions relate to an electronic device and a method for transmitting a message to a satellite.

### [Background Art]

Recently, spread of various types of electronic devices, such as a smartphone, a tablet personal computer (PC), wireless earphones, a smartwatch, and the like, has been increasing. Such an electronic device may include communication circuitry capable of connecting with a satellite. The electronic device may provide an emergency rescue service by using the connection with the satellite.

### [Disclosure]

### [Technical Solution]

In an electronic device according to an embodiment, the electronic device may comprise a display, a sensor, communication circuitry, at least one processor comprising processing circuitry, and memory comprising one or more storage mediums storing instructions. The instructions, when executed by the at least one processor individually or collectively, may cause the electronic device to transmit, based on receiving an input for transmitting a message to a satellite, the message through the communication circuitry. The instructions, when executed by the at least one processor individually or collectively, may cause the electronic device to display, on the display, a first visual object to indicate a transmission rate of the message according to elapsed time during a time interval for a reference transmission rate of the message. The instructions, when executed by the at least one processor individually or collectively, may cause the electronic device to, after the time interval, display, on the display, a second visual object to indicate that the message is transmitted, based on receiving, from the satellite through the communication circuitry, an acknowledgment signal for the message. The time interval may be identified based on an altitude intensity obtained using the sensor of the electronic device with respect to the satellite.

In a method performed by an electronic device according to an embodiment, the method may comprise transmitting, based on receiving an input for transmitting a message to a satellite, the message through communication circuitry. The method may comprise displaying, on a display, a first visual object to indicate a transmission rate of the message according to elapsed time during a time interval for a reference transmission rate of the message. The method may comprise, after the time interval, displaying, on the display, a second visual object to indicate that the message is transmitted, based on receiving, from the satellite through the communication circuitry, an acknowledgment signal for the message. The time interval may be identified based on an altitude intensity obtained using a sensor of the electronic device with respect to the satellite.

In an electronic device according to an embodiment, the electronic device may comprise a display, a sensor, communication circuitry, at least one processor comprising processing circuitry, and memory comprising one or more storage mediums storing instructions. The instructions, when executed by the at least one processor individually or collectively, may cause the electronic device to receive, based on identifying an input for receiving a message from a satellite, the message through the communication circuitry. The instructions, when executed by the at least one processor individually or collectively, may cause the electronic device to display, on the display, a first visual object to indicate a transmission rate of the message according to elapsed time during a time interval for a reference transmission rate of the message. The instructions, when executed by the at least one processor individually or collectively, may cause the electronic device to, after the time interval, display, on the display, a second visual object to indicate that the message is received, based on receiving, from the satellite through the communication circuitry, an acknowledgment signal for the message. The time interval may be identified based on the number of characters in the message and an altitude intensity obtained using the sensor of the electronic device with respect to the satellite.

### [Description of the Drawings]

FIG. 1 illustrates an example of a user interface (UI) for an electronic device according to an embodiment for transmitting a message to a satellite.
FIG. 2 illustrates an exemplary block diagram of an electronic device according to an embodiment.
FIG. 3 illustrates an exemplary block diagram indicating one or more processes for an electronic device according to an embodiment.
FIG. 4 illustrates an example of a network environment related to an electronic device according to an embodiment.
FIG. 5 illustrates an example of an operation in which an electronic device according to an embodiment transmits a signal to a satellite.
FIG. 6 illustrates an example of a UI related to transmission of a message by an electronic device according to an embodiment.
FIGS. 7A to 7B illustrate an example of a visual object for an electronic device according to an embodiment to identify a relative position of a satellite with respect to the electronic device.
FIG. 8 illustrates an example of an operation in which an electronic device according to an embodiment displays a visual object to indicate transmission of a message.
FIG. 9 illustrates an example of an operation in which an electronic device according to an embodiment displays a visual object indicating that transmission of a message is completed.
FIG. 10 illustrates an example of a signal flowchart between an electronic device according to an embodiment and a satellite.
FIG. 11 illustrates an example of a flowchart of an operation performed by an electronic device according to an embodiment.
FIG. 12 illustrates an exemplary flowchart indicating an operation in which an electronic device according to an embodiment sets a time interval based on the number of characters.
FIG. 13 illustrates an exemplary flowchart indicating an operation in which an electronic device according to an embodiment sets a time interval based on an altitude intensity.
FIG. 14 illustrates an exemplary flowchart indicating an operation in which an electronic device according to an embodiment sets a time interval based on the number of characters and an altitude intensity.
FIG. 15 is an exemplary flowchart of an operation performed by an electronic device according to an embodiment.
FIG. 16 illustrates an exemplary flowchart indicating an operation in which an electronic device according to an embodiment identifies a time interval based on a designated period.
FIG. 17 illustrates an example of a flowchart of an electronic device according to an embodiment.
FIG. 18 illustrates an example of a signal flow between an electronic device according to an embodiment and a satellite.
FIG. 19 illustrates an example of a flowchart of an electronic device according to an embodiment.
FIG. 20 illustrates an example of an operation in which an electronic device according to an embodiment transmits a message.
FIG. 21 illustrates an example of a user interface for an electronic device according to an embodiment to transmit a message to a satellite.
FIG. 22 is a block diagram of an electronic device in a network environment according to various embodiments.

### [Mode for Invention]

Hereinafter, various embodiments of the present document are described with reference to the attached drawings.

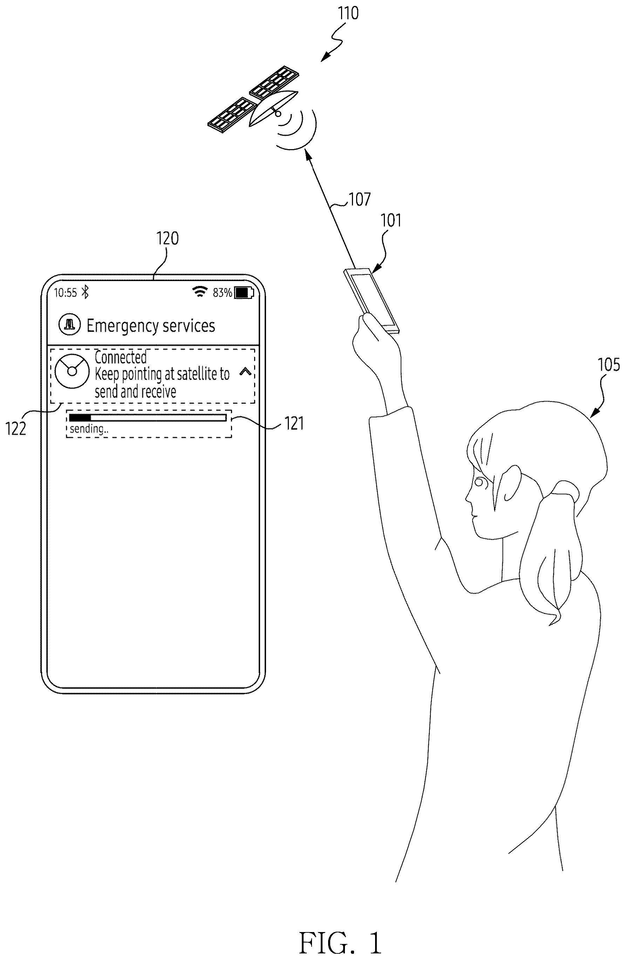

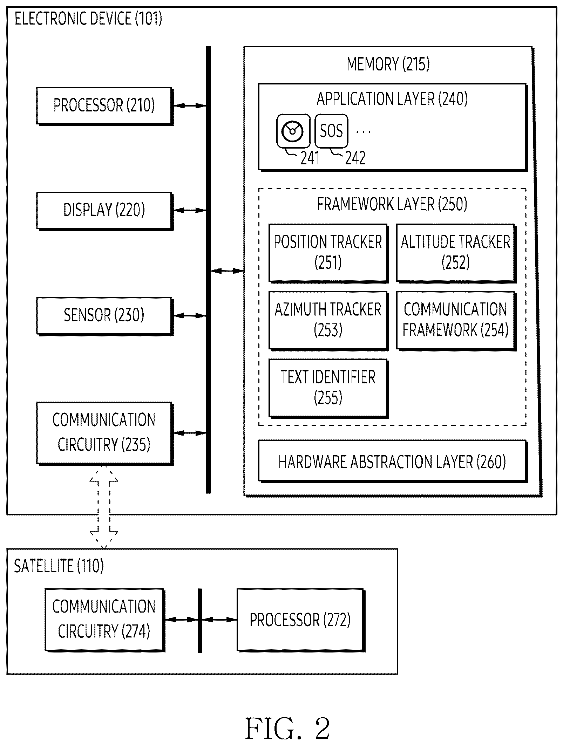

FIG. 1 illustrates an example of a user interface (UI) for an electronic device according to an embodiment for transmitting a message to a satellite. Referring to FIG. 1, an electronic device 101 according to an embodiment may include a terminal that is owned by a user 105. The terminal may include a personal computer (PC) such as a laptop and a desktop, a smartphone, a smart pad, a tablet PC, a smartwatch, and a smart accessory such as a head-mounted device (HMD). A satellite 110 according to an embodiment may include an artificial structure that moves based on an orbit corresponding to a celestial body such as a planet (e.g., Earth) or a moon. The satellite 110 may be set to remain in a designated orbit for a designated time. However, it is not limited thereto. The satellite 110 may perform an operation such as communication, navigation, and/or observation. One or more hardware configurations included in the electronic device 101 and/or the satellite 110 are described below in FIG. 2.

The electronic device 101 according to an embodiment may identify an input for transmitting a message to the satellite 110. For example, the electronic device 101 may identify an input for transmitting a message to the satellite 110 in a state in which the electronic device 101 is not connected to one or more base stations. The electronic device 101 may identify an input for transmitting a message to the satellite 110 based on a radio resource control (RRC) idle state of the electronic device maintained for a reference time. However, it is not limited thereto.

For example, the electronic device 101 may identify the input based on execution of a message application related to the message to be transmitted to the satellite 110. The electronic device 101 may display a user interface (not illustrated) on a display for inputting the message to be transmitted to the satellite 110, based on the execution of the message application. The electronic device 101 may obtain the message to be transmitted to the satellite 110 using the user interface for inputting the message. The electronic device 101 may display, on the display, a user interface (UI) 120 for transmitting the message to the satellite 110 based on obtaining the message. The input identified based on the execution of the message application related to the message may include an input for obtaining the message to be transmitted to the satellite 110 and an input for obtaining a message to be received from the satellite 110.

For example, the message may include a text message, a multimedia messaging service (MMS), and/or a signal for performing a voice call to be transmitted by the electronic device 101 to another electronic device, a base station, and/or a ground station through the satellite 110. However, it is not limited thereto.

For example, the electronic device 101 may include the user interface 120 including one or more visual objects 121 and 122 in the display. The electronic device 101 may display the visual object 121 on the display to indicate a transmission rate of the message according to elapsed time during a time interval for a reference transmission rate of the message. The electronic device 101 may display the visual object 121 on the display so that the transmission rate increases to the reference transmission rate in proportion to the elapsed time. The visual object 121 may include a bar type visual object (e.g., a progress bar (or a visual object based on a bar type)) for indicating the transmission rate of the message and a text object (e.g., sending) indicating that the message is being transmitted. The time interval may be identified based on the number of characters of the message and/or a connection status (e.g., communication intensity) between the electronic device 101 and the satellite 110. For example, when the electronic device 101 receives a message from the satellite 110, the time interval may be identified based on the number of characters of the message to be received from the satellite 110 and/or the connection status.

For example, the bar type visual object for indicating the transmission rate of the message may change according to time elapsed while the electronic device 101 transmits the message to the satellite 110. The bar type visual object may change according to the time elapsed during a time interval corresponding to a designated ratio (e.g., 80%) of the bar type visual object.

For example, the text object may include text indicating that the message is being transmitted. The text object may include text on elapsed time while the electronic device 101 transmits the message to the satellite 110. The text object may include time information from a timepoint at which the electronic device 101 receives an input indicating the transmission of the message to the satellite 110 to a timepoint at which it receives a signal indicating completion of the message transmission from the satellite 110. That is, the text object may include information on a time remaining until the completion of the message transmission.

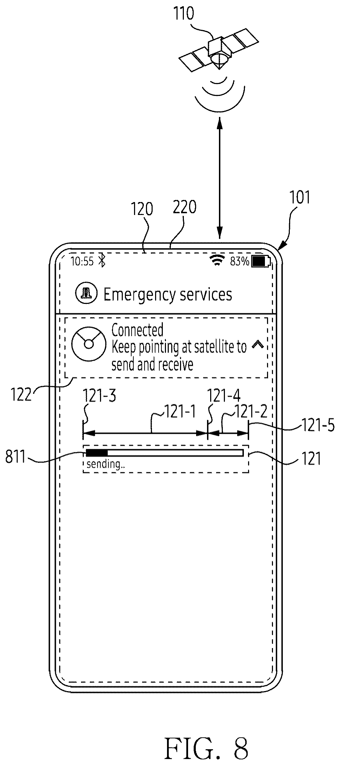

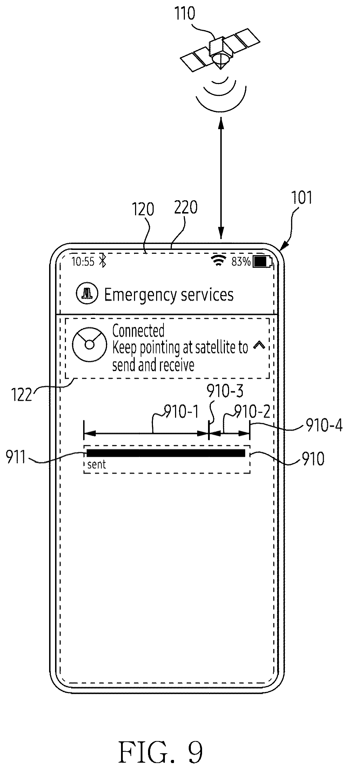

For example, the electronic device 101 may display another visual object (not illustrated) on the display that is distinct from the visual object 121, based on receiving the signal indicating the completion of the message transmission from the satellite 110. The other visual object may include a bar type visual object indicating the completion of the message transmission and a text object (e.g., sent) indicating that the message is transmitted. An operation in which the electronic device 101 controls the visual object displayed on the display based on whether the message transmission is completed is described below in FIGS. 8 and 9.

For example, the electronic device 101 may display the visual object 122 on the display to initiate the transmission of the message to the satellite 110 by using communication circuitry. The electronic device 101 may obtain, using a sensor, an elevation angle of the electronic device with respect to the satellite 110 and an azimuth of the electronic device with respect to the satellite 110. The electronic device 101 may identify the elevation angle and the azimuth based on receiving, from the satellite 110, information indicating a position of the satellite 110. The electronic device 101 may identify a relative position of the satellite 110 with respect to the electronic device 101 based on identifying the elevation angle and the azimuth. The electronic device 101 may display the visual object 122 indicating a connection with the satellite based on identifying that the relative position is within a designated region. The visual object 122 may include a visual object for guiding the relative position of the satellite 110 with respect to the electronic device 101 into the designated region. The visual object 122 may include a text object (e.g., connecting or connected) indicating a connection status with the satellite. The visual object 122 may include a text object (e.g., match position or matching) indicating a transmittable state of the message. The transmittable state of the message may include a state in which a direction of the electronic device 101 and a direction of the satellite 110 are matched.

For example, the electronic device 101 may identify the relative position between the satellite 110 and the electronic device 101 using information indicating a position of the electronic device 101 and a designated orbit corresponding to the satellite 110. The information indicating the designated orbit of the satellite 110 may be stored in memory of the electronic device 101. The electronic device 101 may update the information based on a designated period (e.g., one day). To update the information, the electronic device 101 may receive, from the satellite 110, information indicating a position. However, it is not limited to the embodiment described above.

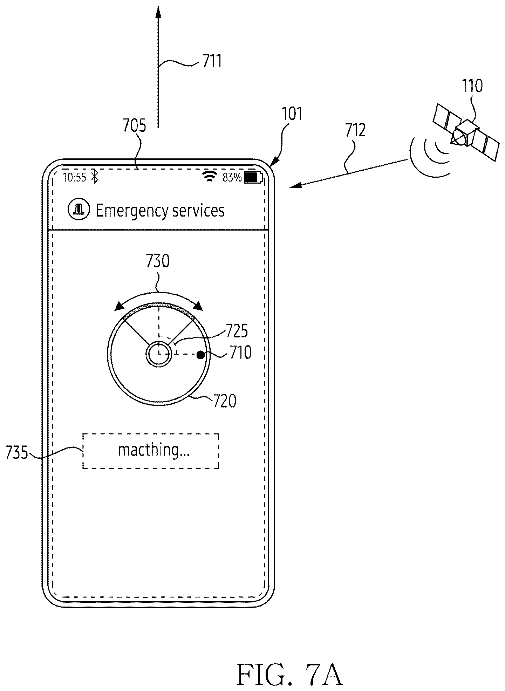

An operation in which the electronic device 101 identifies the relative position of the satellite 110 with respect to the electronic device 101 by using the visual object 122 is described below in FIGS. 7A to 7B.

For example, the electronic device 101 may transmit a signal 107 indicating the message to the satellite 110 in a state in which the connection with the satellite is completed. The electronic device 101 may notify the user 105 of an operation of transmitting the message by using the visual object 122. The message and/or the signal 107 indicating the message may include a current status of the user 105 of the electronic device 101 that transmitted the message, a position of the electronic device 101, time information when the message was transmitted, and/or profile information of the user 105. However, it is not limited thereto.

As described above, the electronic device 101 according to an embodiment may receive an input for establishing the connection with the satellite 110 in a state of not being connected with one or more base stations. The electronic device 101 may obtain the message to be transmitted to the satellite 110 based on receiving the input. The electronic device 101 may identify the time interval for transmitting the message to the satellite 110. The electronic device 101 may identify the time interval based on the number of characters of the message and an intensity of a signal indicating the connection between the electronic device 101 and the satellite 110. The electronic device 101 may guide the user 105 to a time when the transmission of the message will be completed using the visual object 121 representing the time interval.

FIG. 2 illustrates an exemplary block diagram of an electronic device according to an embodiment. An electronic device 101 of FIG. 2 may include the electronic device 101 of FIG. 1. A satellite 110 of FIG. 2 may include the satellite 110 of FIG. 1.

According to an embodiment, the electronic device 101 may include at least one of a processor 210, memory 215, a display 220, a sensor 230, or communication circuitry 235. The processor 210, the memory 215, the display 220, the sensor 230, and the communication circuitry 235 may be electronically and/or operably coupled with each other by an electronical component such as a communication bus. Hereinafter, hardware being operably coupled may mean that a direct connection or an indirect connection between the hardware is established by wire or wirelessly, so that second hardware is controlled by first hardware among the hardware. Although illustrated based on different blocks, an embodiment is not limited thereto, and a portion (e.g., at least a portion of the processor 210, the memory 215, and the communication circuitry 235) among the hardware of FIG. 2 may be included in a single integrated circuit such as a system on a chip (SoC). A type and/or the number of hardware included in the electronic device 101 is not limited to that illustrated in FIG. 2. For example, the electronic device 101 may include only a portion of hardware components illustrated in FIG. 2.

According to an embodiment, the processor 210 of the electronic device 101 may include hardware for processing data based on one or more instructions. The hardware for processing data may include, for example, an arithmetic and logic unit (ALU), a floating point unit (FPU), a field programmable gate array (FPGA), a central processing unit (CPU), and/or an application processor (AP). The processor 210 may have a structure of a single-core processor, or may have a structure of a multi-core processor such as a dual core, a quad core, or a hexa core.

According to an embodiment, the memory 215 of the electronic device 101 may include a hardware component for storing data and/or an instruction inputted to and/or outputted from the processor 210 of the electronic device 101. The memory 215 may include, for example, volatile memory such as random-access memory (RAM) and/or non-volatile memory such as read-only memory (ROM). The volatile memory may include, for example, at least one of dynamic RAM (DRAM), static RAM (SRAM), Cache RAM, or pseudo SRAM (PSRAM). The non-volatile memory may include, for example, at least one of programmable ROM (PROM), erasable PROM (EPROM), electrically erasable PROM (EEPROM), flash memory, a hard disk, a compact disk, a solid state drive (SSD), or an embedded multi media card (eMMC).

In an embodiment, the display 220 of the electronic device 101 may output visualized information (e.g., the user interface 120 of FIG. 1) to a user (e.g., the user 105 of FIG. 1). For example, the display 220 may output visualized information to the user by being controlled by the processor 210 including circuitry such as a graphic processing unit (GPU). The display 220 may include a flat panel display (FPD) and/or electronic paper. The FPD may include a liquid crystal display (LCD), a plasma display panel (PDP), and/or one or more light emitting diodes (LEDs). The LED may include an organic LED (OLED).

According to an embodiment, the sensor 230 of the electronic device 101 may generate electronic information that may be processed by the processor 210 and/or the memory 215 of the electronic device 101 from non-electronic information related to the electronic device 101. The information may be referred to as sensor data. The sensor 230 may include a global positioning system (GPS) sensor for detecting a geographic location of the electronic device 101, an image sensor, an illuminance sensor and/or a time-of-flight (ToF) sensor, and an inertial measurement unit (IMU) for detecting a physical motion of the electronic device 101. For example, using the sensor 230 including the IMU, the electronic device 101 may identify a direction of the electronic device 101.

The IMU may include an acceleration sensor, a gyro sensor, a geomagnetic sensor, or a combination thereof. The acceleration sensor may output data indicating a direction and/or magnitude of gravitational acceleration applied to the acceleration sensor along a plurality of axes (e.g., x-axis, y-axis, and z-axis) that are perpendicular to each other. The gyro sensor may output data indicating rotation of each of the plurality of axes. The geomagnetic sensor may output data indicating a direction (e.g., a direction of N pole or S pole) of a magnetic field in which the geomagnetic sensor is included. The IMU in the sensor 230 may be referred to as a motion sensor in terms of detecting a motion of the electronic device 101. For example, the electronic device 101 may identify a direction of the electronic device 101 by controlling the sensor 230. The electronic device 101 may display, in a display, a visual object (e.g., the visual object 122 of FIG. 1) indicating a relative position of the satellite 110 with respect to the electronic device 101, based on identifying the direction.

In an embodiment, the communication circuitry 235 of the electronic device 101 may include a hardware component for supporting transmission and/or reception of an electrical signal between the electronic device 101 and an external electronic device (e.g., the satellite 110). The communication circuitry 235 may include, for example, at least one of a modem, an antenna, and an optic/electronic (O/E) converter. The communication circuitry 235 may support transmission and/or reception of an electrical signal based on various types of protocols, such as Ethernet, local area network (LAN), wide area network (WAN), wireless fidelity (WiFi), Bluetooth, Bluetooth low energy (BLE), ZigBee, long term evolution (LTE), and/or 5G new radio (NR).

For example, the electronic device 101 may establish a connection with the satellite 110 by using the communication circuitry 235. First transmission power obtained by the electronic device 101 based on the connection between the electronic device 101 and the satellite 110 may be included in a range higher than a range of second transmission power obtained based on a connection between the electronic device 101 and at least one base station. The electronic device 101 may transmit a message to the satellite 110 with the first transmission power. The electronic device 101 may transmit the message to the satellite 110 based on the first transmission power obtained using communication circuitry configured to operate based on a voltage from power supply circuitry.

According to an embodiment, one or more instructions (or commands) indicating a calculation and/or an operation to be performed on data by the processor 210 of the electronic device 101 may be stored in the memory 215 of the electronic device 101. A set of one or more instructions may be referred to as a program, firmware, an operating system, a process, a routine, a sub-routine and/or an application. Hereinafter, an application being installed in an electronic device (e.g., the electronic device 101) may mean that one or more instructions provided in a form of an application are stored in the memory 215, and that the one or more applications are stored in a format (e.g., a file having an extension designated by an operating system of the electronic device 101) executable by a processor of the electronic device.

Referring to FIG. 2, programs installed in the electronic device 101 may be classified into any one layer among different layers including an application layer 240, a framework layer 250, and/or a hardware abstraction layer (HAL) 260, based on a target. For example, programs (e.g., drivers) designed to target hardware (e.g., the display 220, the sensor 230, and/or the communication circuitry 235) of the electronic device 101 may be classified in the hardware abstraction layer 260. For example, programs (e.g., a position tracker 251, an altitude tracker 252, an azimuth tracker 253, a communication framework 254, and/or a text identifier 255) designed to target at least one of the hardware abstraction layer 260 and/or the application layer 240 may be classified in the framework layer 250. Programs classified into the framework layer 250 may provide an application programming interface (API) executable based on another program.

For example, a program designed to target a user (e.g., the user 105 of FIG. 1) controlling the electronic device 101 may be classified in the application layer 240. As an example of programs classified into the application layer 240, a pointing application 241 and/or an emergency call (e.g., SOS) application 242 are exemplified, but an embodiment is not limited thereto. For example, the programs (e.g., a software application) classified into the application layer 240 may cause execution of a function supported by the programs classified into the framework layer 250, by calling the API.

For example, the electronic device 101 may identify information on a position of the electronic device 101 included in a real space based on execution of the position tracker 251. The electronic device 101 may identify the information on the position using the sensor 230. The electronic device 101 may receive the information on the position of the electronic device 101 from the satellite 110 using the communication circuitry 235. However, it is not limited thereto.

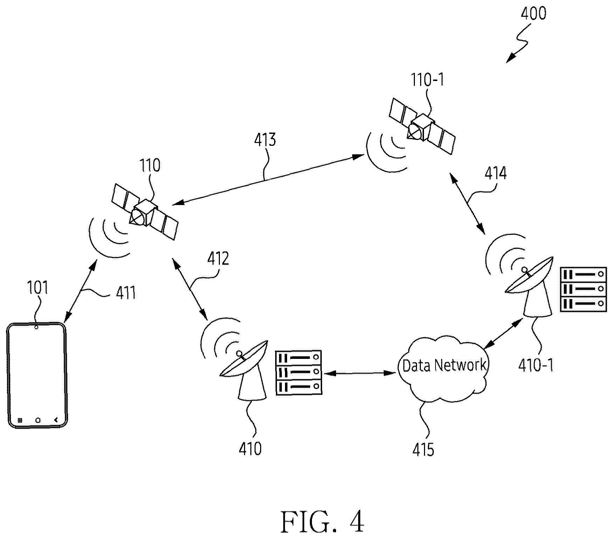

For example, the electronic device 101 may identify an altitude of the electronic device 101 based on execution of the altitude tracker 252. The electronic device 101 may identify the altitude by controlling the sensor 230 and/or the communication circuitry 235. The electronic device 101 may identify an altitude of the satellite 110 based on receiving, from the satellite 110 through the communication circuitry 235, information indicating a position of the satellite 110. The electronic device 101 may identify an elevation angle between the electronic device 101 and the satellite 110 by using the altitude of the electronic device 101 and the altitude of the satellite 110. The electronic device 101 may identify an altitude intensity of a connection between the electronic device 101 and the satellite 110 by using the altitude of the electronic device 101 and the altitude of the satellite 110. An operation in which the electronic device 101 identifies the altitude intensity is described below in FIG. 4.

For example, the electronic device 101 may identify an orientation (or a direction) of the electronic device 101 based on execution of the azimuth tracker 253. The electronic device 101 may identify the orientation of the electronic device 101 using the sensor 230 and/or the communication circuitry 235. The electronic device 101 may identify an azimuth between the satellite 110 and the electronic device 101 based on receiving, from the satellite 110, the information indicating the position of the satellite 110 through the communication circuitry 235. The electronic device 101 may identify an azimuth intensity of the connection between the electronic device 101 and the satellite 110 based on identifying the azimuth.

For example, the electronic device 101 may identify an intensity of the connection between the electronic device 101 and the satellite 110 based on identifying the elevation angle and/or the azimuth. The electronic device 101 may obtain data indicating the intensity of the connection by using a communication interface (e.g., QESDK) used to establish the connection with the satellite 110, based on execution of the communication framework 254 (e.g., telephony). The electronic device 101 may identify the intensity of the connection using, for example, a first data value (e.g., -3 to +3) indicating an altitude intensity corresponding to the elevation angle. The electronic device 101 may identify the intensity of the connection using a second data value (e.g., -3 to +3) indicating an azimuth intensity corresponding to the azimuth. The communication interface may include data on the altitude intensity, the azimuth intensity, the altitude of the electronic device 101, the orientation of the electronic device 101, the altitude of the satellite 110, and/or an orientation of the satellite 110. The electronic device 101 may perform data exchange between the pointing application 241 and a communication service for providing the connection with the satellite 110 by using the communication interface.

For example, an operation in which the electronic device 101 identifies the altitude intensity and/or the azimuth intensity may be performed by calling an application programming interface (API) provided based on the execution of the communication framework 254. The API may be called based on execution of a program included in the application layer 240. For example, based on execution of the pointing application 241, the electronic device 101 may call an API (e.g., QESDK) related to data on the satellite 110 to be processed by the pointing application 241, using the communication framework 254. The electronic device 101 may obtain, using the API, a time interval for a reference transmission rate of the message to be transmitted from the electronic device 101 to the satellite 110 based on the altitude intensity and/or the azimuth intensity.

For example, the electronic device 101 may identify the number of characters of the message based on execution of the text identifier 255. The electronic device 101 may obtain a data set corresponding to the number of characters based on identifying the number of characters. However, it is not limited thereto. The electronic device 101 may identify a length of strings of the message. For example, the electronic device 101 may identify a capacity of the entire message based on identifying the data set. The electronic device 101 may obtain a time interval required for the electronic device 101 to transmit the message to the satellite 110 based on identifying the capacity of the entire message.

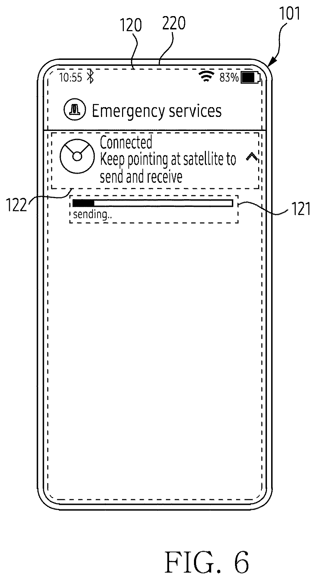

For example, the electronic device 101 may generate a message based on the execution of the pointing application 241. The electronic device 101 may identify the number of characters of the message using the text identifier 255 based on generating the message. The electronic device 101 may identify a first time interval taken to transmit the message to the satellite 110 based on identifying the number of characters greater than or equal to a reference number. The electronic device 101 may identify a second time interval taken to transmit the message to the satellite 110 based on identifying the number of characters less than the reference number. The first time interval may be longer than the second time interval. The electronic device 101 may set a time interval to be transmitted from the electronic device 101 to the satellite 110 based on the number of characters identified using the text identifier 255 and/or a connection intensity (e.g., the altitude intensity and/or the azimuth intensity) with the satellite 110 identified using the communication framework 254. For example, the electronic device 101 may identify a visual object (e.g., the visual object 121 of FIG. 1) related to the time interval. In FIG. 6, an operation in which the electronic device 101 displays the visual object related to the time interval is described.

Referring to FIG. 2, according to an embodiment, the electronic device 101 may communicate with the satellite 110 using the communication circuitry 235. The satellite 110 may include at least one of a processor 272 and communication circuitry 274. In the satellite 110, the processor 272 and the communication circuitry 274 may be electronically and/or operably coupled with each other by an electronical component such as a communication bus. Each of the processor 272 and the communication circuitry 274 in the satellite 110 may correspond to each of the processor 210 and the communication circuitry 235 in the electronic device 101. To reduce repetition of description, among descriptions of the processor 272 and the communication circuitry 274, descriptions overlapping with the processor 210 and the communication circuitry 235 in the electronic device 101 may be omitted.

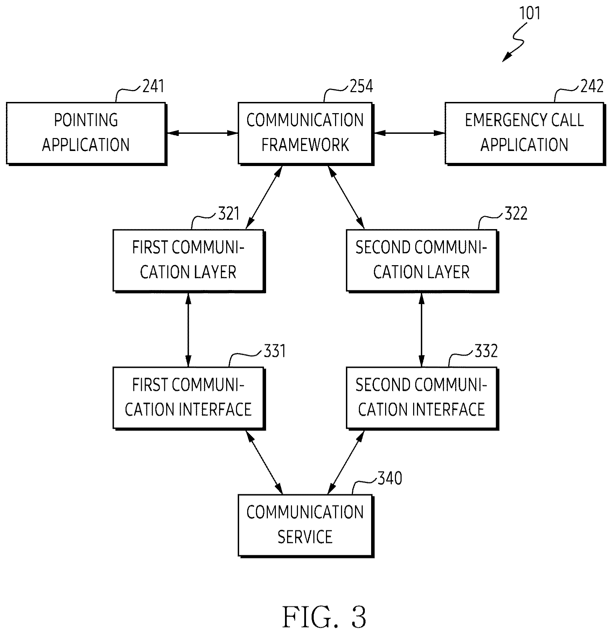

Hereinafter, in FIG. 3, a relationship between different layers for the electronic device 101 to process data related to the satellite 110 is described.

FIG. 3 illustrates an exemplary block diagram indicating one or more processes for an electronic device according to an embodiment. An electronic device 101 of FIG. 3 may include the electronic device 101 of FIGS. 1 and 2. Referring to FIG. 3, a relationship between programs positioned in each of the different layers installed in the electronic device 101 is illustrated. Although illustrated based on different blocks, an embodiment is not limited thereto, and a type and/or the number of programs included in the electronic device 101 are not limited to that illustrated in FIG. 3.

According to an embodiment, the electronic device 101 may identify a pointing application 241, an emergency call application 242, and/or a communication service 340 classified in an application layer (e.g., the application layer 240 of FIG. 2). The electronic device 101 may identify an interaction between each of one or more applications classified into the application layer and a user (e.g., the user 105 of FIG. 1).

For example, the electronic device 101 may identify an input of the user for generating a message based on execution of the pointing application 241. The electronic device 101 may use a communication framework 254 to transmit the generated message to a satellite (e.g., the satellite 110 of FIG. 1) using a communication service 340.

For example, the electronic device 101 may obtain an API related to communication based on execution of the communication framework 254. The electronic device 101 may obtain a first communication interface 331 (e.g., QESDK) executable by the communication service 340 based on execution of a first communication layer (e.g., a satellite interface) classified into a hardware abstraction layer 260. For example, the first communication layer 321 may be used to provide a connection with the satellite. The electronic device 101 may establish a connection with the satellite by calling the first communication interface 331 based on execution of the communication service 340.

For example, the electronic device 101 may obtain a second communication interface 332 (e.g., a Qualcomm radio interface layer (QCRIL)) executable by the communication service 340 based on execution of a second communication layer 322 (e.g., cellular HAL) classified into a hardware abstraction layer (e.g., the hardware abstraction layer 260 of FIG. 2). The electronic device 101 may establish a connection with one or more base stations using the second communication interface 332 based on the execution of the communication service 340. However, it is not limited thereto.

For example, the electronic device 101 may process the first communication interface 331 related to the satellite obtained from the communication service 340, based on the execution of the pointing application 241. For example, the electronic device 101 may obtain, from the satellite, data related to the satellite based on establishing the connection with the satellite using the communication service 340. The electronic device 101 may call the first communication interface 331 executable by the pointing application 241 based on obtaining the data related to the satellite. The first communication interface 331 may include a data value (or a parameter) indicating a position of the satellite and an intensity (e.g., an altitude intensity and/or an azimuth intensity) of the connection established with the satellite. The electronic device 101 may set, based on the execution of the pointing application 241, a time interval taken to transmit the message to the satellite by using a data value indicating the intensity of the connection, using the first communication interface 331. For example, the electronic device 101 may obtain a data value indicating the intensity of the connection with the satellite based on an algorithm related to a geometric mean by using a data value indicating the altitude intensity (e.g., vIntensity) (e.g., at least one value between -3 and +3) and a data value indicating the azimuth intensity (e.g., ulntensity) (e.g., at least one value between -3 and +3). The electronic device 101 may set the time interval based on the data value indicating the intensity of the connection with the satellite by using the pointing application 241. However, it is not limited thereto.

For example, the electronic device 101 included in a radio resource control (RRC) idle state may include a state in which the second communication interface 332 executable by applications different from the communication service 340 may not be called, based on the execution of the communication service 340. The electronic device 101 may call the second communication interface 332 executable by the communication service 340 based on execution of the emergency call application 242, but is not limited thereto.

Hereinafter, an operation in which the electronic device 101 transmits and receives data between the pointing application 241 and the communication service 340 may include an operation of obtaining the first communication interface 331 or the second communication interface 332 through the communication framework 254, the first communication layer 321, and/or the second communication layer 322.

As described above, according to an embodiment, the electronic device 101 may transmit the message obtained based on the execution of the pointing application 241 to the satellite through the communication service 340. The electronic device 101 may obtain the first communication interface 331 executable by the communication service 340, based on obtaining the message.

For example, the electronic device 101 may call the first communication interface 331 including the data related to the satellite (e.g., data on a connection intensity) obtained based on the execution of the communication service 340. The electronic device 101 may provide the user with a time interval based on the data by executing the first communication interface 331 using the pointing application 241.

FIG. 4 illustrates an example of a network environment related to an electronic device according to an embodiment. An electronic device 101 of FIG. 4 may include the electronic device 101 of FIGS. 1 to 3. A satellite 110 of FIG. 4 may include the satellite 110 of FIGS. 1 to 3. Referring to FIG. 4, an exemplary network environment 400 for transmitting and receiving a signal among the electronic device 101, the satellite 110, and/or one or more ground stations 410 and 410-1 is illustrated.

The electronic device 101 according to an embodiment may establish a connection 411 (e.g., a service link) with the satellite 110 by using communication circuitry (e.g., the communication circuitry 235 of FIG. 2). For example, the connection 411 may be established based on a relatively lower frequency range than a connection 412 between the satellite 110 and the ground station 410. Transmission power for the electronic device 101 to transmit a message to the satellite 110 based on the connection 411 established with the satellite 110 may be included in a relatively higher range than other transmission power for transmitting a signal based on a connection between the electronic device 101 and a base station (not illustrated). For example, the electronic device 101 may establish the connection 411 in response to an input indicating that the message is transmitted, to reduce power consumption of a battery used based on the connection 411 with the satellite 110. However, it is not limited thereto.

For example, the satellite 110 may establish a connection with the one or more ground stations 410 and 410-1. The connection 412 (e.g., a feeder link) between the satellite 110 and the ground station 410 may be established based on a relatively higher frequency range and/or a wider frequency band than the connection 411.

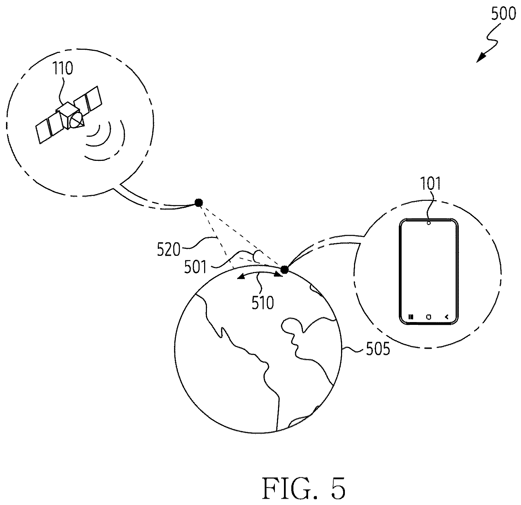

For example, the satellite 110 may use a connection 413 (e.g., an inter-satellite link) between the satellite 110 and a satellite 110-1 to obtain information from the other ground station 410-1. The connection 413 may be established based on optical communication. For example, the satellite 110-1 may transmit information obtained based on a connection 414 established with the other ground station 410-1, based on the connection 413 with the satellite 110. For example, the satellite 110 may receive information from the other ground station 410-1 through the ground station 410 based on a network environment 415 indicating a connection between the one or more ground stations 410 and 410-1. However, it is not limited thereto. In FIG. 5, information transmitted and received between the electronic device 101 and the satellite 110 in the network environment 400 is described.

FIG. 5 illustrates an example of an operation in which an electronic device according to an embodiment transmits a signal to a satellite. An electronic device 101 of FIG. 5 may include the electronic device 101 of FIGS. 1 to 4. Referring to FIG. 5, an exemplary environment 500 for performing an interaction between the electronic device 101 positioned on a planet 505 (e.g., Earth) and a satellite 110 adjacent to the planet 505 is illustrated.

The electronic device 101 according to an embodiment may establish a connection (e.g., the connection 411 of FIG. 4) with the satellite 110 through communication circuitry (e.g., the communication circuitry 235 of FIG. 2). The electronic device 101 may receive, from the satellite 110, information based on a downlink using the connection with the satellite 110. The information based on the downlink may include information on a position (e.g., an altitude 520) of the satellite 520, a loss rate, antenna radiated power (e.g., effective isotropic radiated power (EIRP)), receiver sensitivity of the satellite 110, a link margin, antenna gain, and/or received power.

For example, the electronic device 101 may transmit information based on an uplink using the connection with the satellite 110. The information based on the uplink may include information on transmission power, a loss rate, antenna radiated power, receiver sensitivity of the electronic device 101, a link margin, an elevation angle 501 between the satellite 110 and the electronic device 101, and/or antenna gain.

For example, the electronic device 101 may identify the elevation angle 501 between the electronic device 101 and the satellite 110 based on receiving, from the satellite 110, information (e.g., the altitude 520) on the position of the satellite 110. The electronic device 101 may identify an altitude intensity of the electronic device 101 with respect to the satellite 110 based on identifying the elevation angle 501. The electronic device 101 may obtain a time interval related to a message to be transmitted to the satellite 110 based on identifying the altitude intensity.

For example, the electronic device 101 may initiate establishment of the connection with the satellite 110 based on receiving an input for transmitting the message to the satellite 110, based on execution of a pointing application. The electronic device 101 may initiate the establishment of the connection with the satellite 110 by being positioned in a communication range 510 of the satellite 110. For example, the satellite 110 may transmit, to the electronic device 101, a signal including information on the satellite 110 based on receiving at least one signal for the establishment of the connection from the electronic device 101 positioned in the communication range 510. However, it is not limited thereto.

For example, the electronic device 101 may identify a relative position of the satellite 110 with respect to the electronic device 101 to transmit the message. The electronic device 101 may identify that the connection with the satellite 110 for transmitting the message is completed based on identifying that the relative position of the satellite 110 is within a designated region. Hereinafter, in FIG. 6, a user interface 120 for the electronic device 101 according to an embodiment to transmit the message to the satellite 110 based on the execution of the pointing application is described.

FIG. 6 illustrates an example of a UI related to transmission of a message by an electronic device according to an embodiment. An electronic device 101 of FIG. 6 may include the electronic device 101 of FIGS. 1 to 5.

Referring to FIG. 6, the electronic device 101 according to an embodiment may display a user interface 120 for transmitting a message on a display 220 based on receiving an input for transmitting the message to a satellite (e.g., the satellite 110 of FIG. 1). The electronic device 101 may identify the number of characters included in the message based on receiving the input for transmitting the message. The electronic device 101 may obtain a time interval during which the transmission of the message will be completed, by identifying the number of characters. For example, the characters may include special characters such as a space, a comma, a colon, a semi colon, and/or a period.

For example, the electronic device 101 may identify a relative position of the satellite 110 with respect to the electronic device 101 to transmit the message to the satellite 110. An operation in which the electronic device 101 identifies the relative position of the satellite 110 may mean a point operation. The electronic device 101 may display a visual object 122 indicating the relative position of the satellite 110 on the display 220. An intensity of a connection between the electronic device 101 and the satellite 110 may increase based on the electronic device 101 performing the point operation.

For example, the electronic device 101 may notify a user (e.g., the user 105 of FIG. 1) of the relative position of the satellite 110 by using the visual object 122. The electronic device 101 may transmit the message to the satellite 110 based on identifying that the relative position of the satellite 110 is positioned within a designated region.

For example, the electronic device 101 may display, on the display, a visual object 121 to indicate a transmission rate of the message according to elapsed time during a time interval for a reference transmission rate of the message, while transmitting the message to the satellite 110. The time interval may be identified based on the number of characters of the message. The time interval may be identified based on the intensity of the connection between the electronic device 101 and the satellite 110. The time interval may include an interval from a timepoint at which transmission of the message is initiated to a timepoint at which an acknowledgment (ACK) signal is to be received from the satellite 110. The time interval may correspond to the reference transmission rate related to the transmission of the message.

For example, the visual object 121 may include a visual object based on a bar type (e.g., a progress bar) and/or a text object indicating that the transmission is in progress. The visual object 121 may be obtained based on execution of a UI framework included in memory of the electronic device 101. The bar-type-based visual object among the visual object 121 may be divided into a portion indicating that the message is being transmitted and/or a portion indicating it is waiting to receive the acknowledgment signal from the satellite 110. The portion indicating that the message is being transmitted may correspond to the time interval. However, it is not limited thereto. As an example, the electronic device 101 may display the visual object indicating the transmission of the message based on an indeterminate mode. The visual object displayed based on the indeterminate mode may not include information on the time interval.

For example, each of the portions of the bar-type-based visual object of the electronic device 101 may correspond to a designated numerical value (e.g., 0 to 100) (or percentage (%)). The electronic device 101 may set the portion for indicating that the message is being transmitted based on a designated ratio (e.g., 80%) of the bar-type-based visual object.

For example, the electronic device 101 may display, using the visual object 122, the visual object 121 on the display, after displaying the visual object 122, based on identifying that the relative position of the satellite 110 with respect to the electronic device 101 is within the designated region. For example, the electronic device 101 may change the visual object (e.g., the visual object 121) indicating the transmission rate of the message, after performing the point operation, based on displaying the user interface 120 including the visual object 122 and the visual object 121 on the display 220.

As described above, the electronic device 101 according to an embodiment may notify the user (e.g., the user 105 of FIG. 1) of a transmission status of the message using the user interface 120. The electronic device 101 may set the time interval using the number of characters of the message and/or the intensity of the connection between the electronic device 101 and the satellite 110. The electronic device 101 may provide the user with the transmission status of the message using the visual object 121 corresponding to the time interval. The electronic device 101 may predict a time at which the acknowledgment signal indicating completion of the message transmission will be received from the satellite 110 based on setting the time interval. Hereinafter, in FIGS. 7A to 7B, the point operation for identifying the relative position of the satellite 110 with respect to the electronic device 101, for the electronic device 101 according to an embodiment to transmit the message to the satellite 110, is described.

FIGS. 7A to 7B illustrate an example of a visual object for an electronic device according to an embodiment to identify a relative position of a satellite with respect to the electronic device. An electronic device 101 of FIGS. 7A to 7B may include the electronic device 101 of FIGS. 1 to 6. A satellite 110 of FIGS. 7A to 7B may include the satellite 110 of FIGS. 1 to 6. Referring to FIGS. 7A to 7B, a user interface 705 displayed on a display of the electronic device 101 may be related to the visual object 122 of FIG. 1. For example, a visual object 720 included in the user interface 705 may be substantially the same as the visual object 122 of FIG. 1.

Referring to FIG. 7A, the electronic device 101 according to an embodiment may display the user interface 705 on the display to identify the relative position of the satellite 110 based on receiving an input for transmitting a message. The user interface 705 may include the visual object 720 to match a direction of the satellite 110 and a direction of the electronic device 101. The user interface 705 may include a text object 735 indicating that a direction 712 of the satellite 110 and a direction 711 of the electronic device 101 are being matched. The direction 712 of the satellite 110 may include a range in which a signal may be transmitted from the satellite 110 to the electronic device 101. The direction 711 of the electronic device 101 may include a range in which a signal may be transmitted from the electronic device 101 to the satellite 110.

For example, the electronic device 101 may receive, from the satellite 110, information on a position of the satellite 110 based on a connection between the electronic device 101 and the satellite 110. The electronic device 101 may display the user interface 705 on the display based on the information on the position of the satellite 110.

For example, the electronic device 101 may identify, using a sensor, the relative position of the satellite 110 with respect to the electronic device 101 based on identifying the position of the satellite 110. The electronic device 101 may obtain an azimuth 725 of the electronic device 101 with respect to the satellite 110 based on identifying the relative position of the satellite 110. The electronic device 101 may display, on the display, a visual object 710 indicating the relative position of the satellite 110 based on identifying the azimuth 725. The electronic device 101 may guide a user to change a position of the user so that the visual object 710 is positioned within a designated region 730. The designated region 730 may correspond to the direction 711 of the electronic device 101. An operation in which the electronic device 101 matches the direction 711 of the electronic device 101 and the direction 712 of the satellite may be referred to as a point operation.

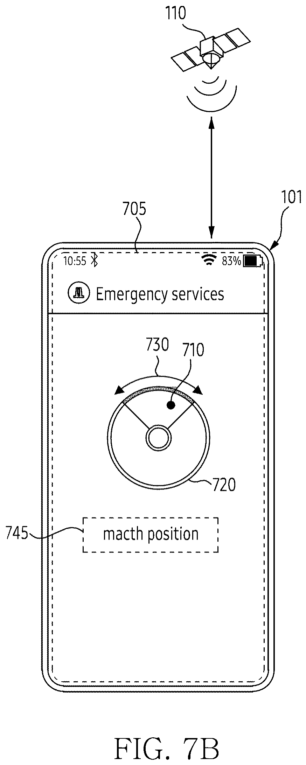

Referring to FIG. 7B, the electronic device 101 according to an embodiment may identify that the relative position of the satellite 110 with respect to the electronic device 101 is within the designated region 730. For example, the electronic device 101 may identify, using the sensor, a change in the direction 711 of the electronic device 101 by guiding the user to change the position of the user. The electronic device 101 may display, on the display, the visual object 710 indicating a changed relative position of the satellite 110 based on identifying the changed direction 711 of the electronic device 101. For example, the electronic device 101 may identify that the direction 711 of the electronic device 101 and the direction 712 of the satellite 110 that are obtained using the sensor, are matched. The matched direction 711 of the electronic device 101 and the direction 712 of the satellite 110 that are matched may include directions opposite to each other.

For example, the electronic device 101 may display a visual object indicating that the connection between the electronic device 101 and the satellite 110 is completed based on identifying that the visual object 710 is positioned within the designated region 730. The electronic device 101 may display, on the display, a text object 745 indicating that the connection is completed by identifying that the relative position of the satellite 110 is positioned within the designated region 730. However, it is not limited thereto. For example, while transmitting the message to the satellite 110, the electronic device 101 may display a text object (e.g., "keep pointing at satellite to send and receive") on the display to guide the user so that the direction 711 of the electronic device 101 and the direction 712 of the satellite 110 are matched. For example, the electronic device 101 may display, on the display, based on identifying completion of the point operation, a pop-up window indicating a notification message indicating the completion to the user. The electronic device 101 identifying the completion of the point operation may include the electronic device 101 identifying that the direction 711 of the electronic device 101 and the direction 712 of the satellite 110 are matched.

For example, the electronic device 101 may identify an intensity of the connection between the electronic device 101 and the satellite 110 based on identifying that the direction 711 of the electronic device 101 and the direction 712 of the satellite 110 are matched. The intensity of the connection may include an altitude intensity obtained based on an elevation angle and/or an azimuth intensity obtained based on an azimuth. The electronic device 101 may obtain a time interval for transmitting the message to the satellite 110 by identifying the number of characters of the message, and may change the time interval by identifying the intensity of the connection.

The electronic device 101 according to an embodiment may identify the position of the satellite 110 according to a designated period based on a characteristic (e.g., a characteristic of changing a position to be positioned in an orbit) of the satellite 110 to be positioned in an orbit. Based on the characteristic of the satellite 110, the electronic device 101 may identify the intensity of the connection that is changed according to the relative position of the satellite 110 with respect to the electronic device 101, based on identifying that the relative position of the satellite 110 changes. The electronic device 101 may change a time interval for a reference transmission rate of the message based on the intensity of the connection that is changed according to the designated period. However, it is not limited thereto.

For example, the electronic device 101 may transmit the message to the satellite 110 based on identifying that the relative position of the satellite 110 is included within the designated region 730. The electronic device 101 may transmit the message to the satellite 110 after the direction 711 of the electronic device 101 and the direction 712 of the satellite 110 are matched. After transmitting the message to the satellite 110, the electronic device 101 may notify the user of the transmission rate of the message based on elapsed time using a visual object (e.g., the visual object 121 of FIG. 6). Hereinafter, in FIGS. 8 to 9, an exemplary operation for guiding the user on a transmission status of the message using the visual object to indicate the transmission rate of the message is described.

FIG. 8 illustrates an example of an operation in which an electronic device according to an embodiment displays a visual object to indicate transmission of a message. An electronic device 101 of FIG. 8 may include the electronic device 101 of FIGS. 1 to 7B. Referring to FIG. 8, an exemplary user interface 120 for indicating that the message is being transmitted to a satellite after a direction of the electronic device 101 and a direction of the satellite (e.g., the satellite 110 of FIG. 1) are matched is illustrated.

The electronic device 101 according to an embodiment may transmit the message to the satellite 110 based on identifying that the direction of the electronic device 101 and the direction of the satellite 110 are matched. While transmitting the message to the satellite 110, the electronic device 101 may display a visual object 121 according to time elapsed. The visual object 121 may indicate a progress status of a process related to the transmission of the message. The electronic device 101 may visually notify a user of the progress status of the transmission of the message using the visual object 121.

For example, the visual object 121 may include a progress indicator 811 moving from a point 121-3 corresponding to a timepoint at which the message is transmitted, toward a point 121-4 corresponding to a timepoint at which an acknowledgment signal is to be received from the satellite 110. The progress indicator 811 being positioned at the point 121-4 corresponding to the timepoint at which the acknowledgment signal is to be received may mean completion of a process or a task related to the transmission of the message by the electronic device 101. For example, the electronic device 101 may visually indicate a transmission rate of the message based on updating a position of the progress indicator 811 according to time elapsed in the visual object 121. For example, the progress indicator 811 may be rendered based on a shape similar to a bar type visual object. The progress indicator 811 may be rendered based on a spherical shape corresponding to a point according to time elapsed.

For example, the electronic device 101 may divide the bar-type-based visual object included in the visual object 121 into a portion 121-1 indicating that the message is being transmitted and/or a portion 121-2 indicating that it is waiting to receive the acknowledgment signal. The portion 121-1 may correspond to a time interval identified by the electronic device 101 based on the number of characters of the message, an altitude intensity, and/or an azimuth intensity. The time interval may include a timepoint that overestimates that the acknowledgment signal will be received from the satellite 110 from a timepoint at which the message was transmitted. The portion 121-1 may be shorter than a length of the bar-type-based visual object. The portion 121-1 may be obtained based on a length corresponding to a designated ratio (e.g., 80%) of the bar-type-based visual object. The designated ratio may correspond to a progress rate of the transmission of the message.

For example, the electronic device 101 may visually display time elapsed using the progress indicator 811 based on the time interval. The electronic device 101 may move the progress indicator 811 from the point 121-3 to the point 121-4 along the bar type visual object. As an example, the electronic device 101 may display different colors for a portion the progress indicator 811 has moved and a portion the progress indicator 811 is to move, while moving the progress indicator 811 according to the time elapsed. The electronic device 101 moving the progress indicator 811 may include extending a length of the progress indicator 811 along the bar-type-based visual object.

The electronic device 101 may display a remaining time corresponding to the time interval on a display 220, independent of using the progress indicator 811 based on the time interval. The remaining time may include a time until the overestimated timepoint at which the acknowledgment signal for the message is received from the satellite 110. For example, the overestimated timepoint may be changed based on an intensity of a connection between the electronic device 101 and the satellite 110. A change in the overestimated timepoint may include a change in the time interval.

For example, the electronic device 101 may update the position of the progress indicator 811 to the point 121-4 corresponding to the overestimated timepoint while transmitting the message to the satellite 110. The electronic device 101 may temporarily refrain from updating the position of the progress indicator 811 by matching the position of the progress indicator 811 and the point 121-4. The electronic device 101 may maintain a display of the progress indicator 811 placed in the point 121-1 until the acknowledgment signal is received from the satellite 110.

As described above, the electronic device 101 according to an embodiment may display, on the display, the visual object 121 indicating the progress rate of the transmission of the message according to time elapsed, while transmitting the message to the satellite 110. The electronic device 101 may visually notify the user of the progress status of the process related to the transmission of the message by displaying the visual object 121 on the display. The electronic device 101 may guide a user 105 with time information when the transmission of the message to the satellite 110 will be completed, based on displaying the visual object 121 on the display.

FIG. 9 illustrates an example of an operation in which an electronic device according to an embodiment displays a visual object indicating that transmission of a message is completed. An electronic device 101 of FIG. 9 may include the electronic device 101 of FIGS. 1 to 8. Referring to FIG. 9, an exemplary state in which the electronic device 101 transmits a message to a satellite (e.g., the satellite 110 of FIG. 1) and then receives, from the satellite 110, an acknowledgment signal for the message is illustrated.

Referring to FIG. 9, the electronic device 101 according to an embodiment may display a visual object 910 to indicate that the message is transmitted based on receiving, from the satellite 110 through communication circuitry, the acknowledgment signal for the message, after a time interval. The visual object 910 may include a bar type visual object indicating completion of message transmission and a text object (e.g., sent) indicating that the transmission of the message is completed. However, it is not limited thereto. For example, when the electronic device 101 receives a message from the satellite 110, the electronic device 101 may display a bar type visual object and a text object (e.g., read or received) indicating that the message is received.

For example, the visual object 910 may correspond to the visual object 121 of FIG. 8 indicating that the message is being transmitted. The electronic device 101 displaying the visual object 910 may include the electronic device 101 changing a position of the progress indicator 811 included in the visual object 121 of FIG. 8 to a point 121-5. For example, a portion 910-1 may be referred to the portion 121-1 of FIG. 8. A portion 910-2 may be referred to the portion 121-2 of FIG. 8. A point 910-3 may be referred to the point 121-4 of FIG. 8. A point 910-4 may be referred to the point 121-5 of FIG. 8. A progress indicator 911 may be referred to the progress indicator 811 of FIG. 8.

For example, while the electronic device 101 temporarily refrains from updating a position of the progress indicator 911 at the point 910-3, the electronic device 101 may receive, from the satellite 110, the acknowledgment signal for the message. The electronic device 101 may change the position of the progress indicator 911 from the point 910-3 to the point 910-4 based on receiving the acknowledgment signal. The electronic device 101 changing the position of the progress indicator 911 from the point 910-3 to the point 910-4 may mean refraining from processing a process for moving the progress indicator 811 along the portion 910-2. The point 910-4 may mean that a process related to the transmission of the message is completed.

For example, in response to changing the position of the progress indicator 911 to the point 910-4, the electronic device 101 may display, on a display, a text object (e.g., sent) different from the text object (e.g., sending) included in the visual object 121 of FIG. 8. The electronic device 101 may display the different text object on the display substantially simultaneously with changing the position of the progress indicator 911.

For example, the electronic device 101 may identify that the message is transmitted to the satellite 110 by displaying the visual object 910 on a display 220, from the satellite 110 through the communication circuitry. The electronic device 101 may identify completion of the process (or a task) related to the transmission of the message based on displaying the visual object 910 on the display 220.

For example, the electronic device 101 may refrain from displaying the visual object 910 after a designated time based on identifying the completion of the process related to the transmission of the message. The electronic device 101 may delete processes related to the message after the designated time based on identifying that the message is transmitted. However, it is not limited thereto.

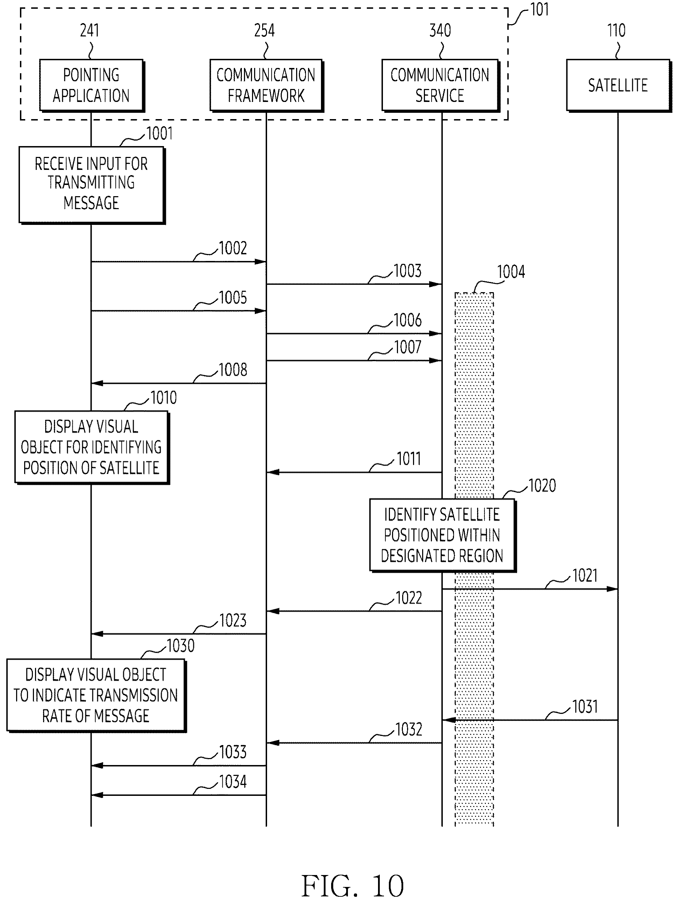

For example, the electronic device 101 may guide a user to match a direction of the electronic device and a direction of the satellite 110 to receive a message from the satellite 110 based on the completion of the message transmission. An operation in which the electronic device 101 receives a message from the satellite may correspond to an operation in which the electronic device 101 transmits a message to the satellite 110. Hereinafter, in FIG. 10, an exemplary signal flowchart indicating processing of processes for the electronic device 101 according to an embodiment to transmit a message to the satellite 110 is described.

FIG. 10 illustrates an example of a signal flowchart between an electronic device according to an embodiment and a satellite. Referring to FIG. 10, an exemplary signal flowchart indicating a signal related to data executable by one or more programs included in an electronic device 101 according to an embodiment is illustrated. The electronic device 101 of FIG. 10 may include the electronic device 101 of FIGS. 1 to 9.

In operation 1001, the electronic device 101 according to an embodiment may receive an input for transmitting a message, based on execution of a pointing application 241. In response to the input, the electronic device 101 may identify another input for obtaining the message using the pointing application 241. The electronic device 101 may obtain the message to be transmitted to a satellite 110 based on the other input. The electronic device 101 may identify the number of characters of the message based on obtaining the message. The electronic device 101 may set a time interval related to a reference transmission rate of the message based on identifying the number of characters. For example, the reference transmission rate of the message may correspond to the portion 121-1 of FIG. 8. The reference transmission rate of the message may indicate a ratio with respect to a length of the portion 121-1 among lengths of the bar type visual object included in the visual object 121 of FIG. 8. For example, the time interval related to the reference transmission rate of the message may include an interval from a timepoint at which the electronic device 101 transmits the message to a timepoint at which an acknowledgment signal for the message is received from the satellite 110.

For example, the electronic device 101 may set the time interval using a first value (e.g., approximately 5 seconds) based on identifying the number of characters less than a reference number (e.g., approximately 100). The electronic device 101 may set the time interval using a second value (e.g., approximately 8 seconds) based on identifying the number of characters greater than or equal to the reference number. However, it is not limited thereto.

For example, the electronic device 101 may generate data 1002 executable by a communication framework 254 to transmit the message based on obtaining the message. The data 1002 may include a session to be used to establish a connection with the satellite 110. Hereinafter, the data 1002 may be related to an API (e.g., QESDK) for performing communication with the satellite 110.

For example, the electronic device 101 may obtain data 1003 controllable by a communication service 340 by processing the data 1002 based on execution of the communication framework 254. The electronic device 101 may initiate a connection 1004 with the satellite 110 through communication circuitry based on processing the data 1003 using the communication service 340.

For example, the electronic device 101 may process data 1005 for the message obtained based on the execution of the pointing application 241 by the communication framework 254, based on establishing the connection 1004. Based on the execution of the communication framework 254, the electronic device 101 may obtain data 1006 to be processed by the communication service 340 based on processing the data 1005. The electronic device 101 may identify an intensity of the connection 1004 with the satellite 110 based on processing the data 1006 by the communication service 340. The electronic device 101 may perform a point operation to obtain the intensity of the connection 1004 to which the message may be transmitted.

For example, the electronic device 101 may obtain data 1007 to be processed by the communication service 340 using the communication framework 254. The electronic device 101 may obtain data 1008 executable by the pointing application 241, using the communication framework 254. The data 1008 may include information requesting to display the visual object 122 of FIG. 1.

For example, in operation 1010, the electronic device 101 may display a visual object (e.g., the visual object 122 of FIG. 1) for identifying a position of the satellite using the pointing application 241. The electronic device 101 may notify, using the visual object, a user that a point operation is performed to match a direction of the electronic device 101 and a direction of the satellite 110.

For example, the electronic device 101 may obtain data 1011 including information on the position of the satellite 110 using the communication service 340. The electronic device 101 may receive the information on the position of the satellite 110 based on a designated period. In operation 1020, the electronic device 101 may identify the satellite positioned within a designated region, based on identifying that the direction (e.g., the direction 711 of FIG. 7A) of the electronic device 101 and a direction 712 of the satellite 110 are matched. The designated region may be referred to the designated region 730 of FIG. 7A. The electronic device 101 may display a visual object (e.g., the text object 745 of FIG. 7B) indicating that the connection with the satellite 110 is completed using the pointing application 241, based on identifying the satellite positioned within the designated region.

For example, the electronic device 101 may transmit a message 1021 to the satellite 110 based on performing the operation 1020. While transmitting the message 1021 to the satellite 110, the electronic device 101 may obtain data 1022 and 1023 for displaying a visual object (e.g., the visual object 121 of FIG. 1) related to the transmission using the pointing application 241. For example, the data 1022 may include information related to an intensity of the connection between the electronic device 101 and the satellite 110. The information may include a parameter related to an altitude intensity corresponding to an elevation angle and/or an azimuth intensity corresponding to an azimuth.

For example, the electronic device 101 may obtain data 1023 to be processed by the pointing application 241 through the communication framework 254, using the communication service 340.

For example, in operation 1030, the electronic device 101 may display a visual object (e.g., the visual object 121 of FIG. 7A) to indicate a transmission rate of the message based on processing the data 1023, using the pointing application 241. The electronic device 101 may display a visual object corresponding to a time interval set based on the number of characters of the message. The electronic device 101 may display a visual object corresponding to a time interval set using the intensity of the connection included in the data 1022. For example, the electronic device 101 may change the time interval set based on the number of characters according to the intensity of the connection. For example, the electronic device may display the visual object from a timepoint at which the data 1023 is obtained to a timepoint at which data 1033 is obtained.

For example, the electronic device 101 may identify that an estimated timepoint included in the time interval has been reached, according to elapsed time while transmitting the message. The electronic device 101 may receive, from the satellite 110, an acknowledgment (ACK) signal 1031 for the message. The electronic device 101 may obtain data 1032 for changing a position of the progress indicator 811 of FIG. 8 using the communication service 340 based on receiving the acknowledgment signal 1301.

For example, the electronic device 101 may generate data 1033 and 1034 to be processed by the pointing application 241 using the communication framework 254, based on obtaining data 1302. The data 1033 may include information requesting to cease displaying the visual object related to the transmission of the message. The data 1034 may include information indicating that the message is transmitted. However, it is not limited thereto. The electronic device 101 may display the visual object 910 of FIG. 9 on the display based on processing the data 1033 and 1034 using the pointing application 241. The electronic device 101 may visually notify the user that the transmission of the message is completed by displaying the visual object on the display. The electronic device 101 may notify the user that the transmission of the message is completed using vibration and/or sound to indicate that the transmission of the message is completed, by controlling an actuator and/or a speaker included in the electronic device 101. However, it is not limited thereto.

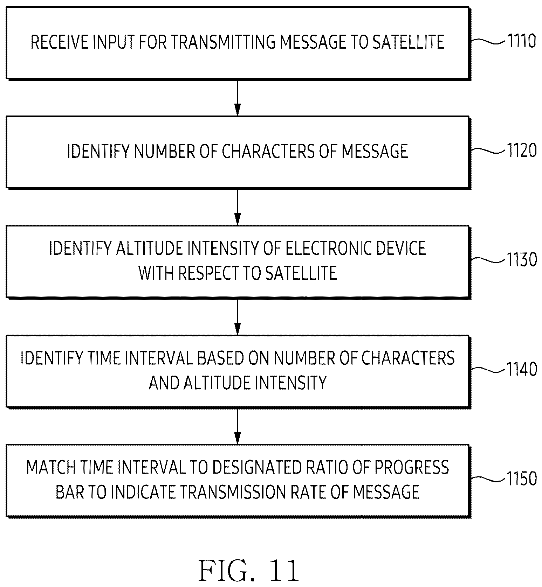

FIG. 11 illustrates an example of a flowchart of an operation performed by an electronic device according to an embodiment. An electronic device of FIG. 11 may include the electronic device 101 of FIGS. 1 to 10. A satellite of FIG. 11 may be referred to the satellite 110 of FIG. 1. At least one of the operations of FIG. 11 may be performed by the electronic device 101 of FIG. 2 and/or the processor 210 of FIG. 2. Each of the operations of FIG. 11 may be performed sequentially, but is not necessarily performed sequentially. For example, an order of each of the operations may be changed, and at least two operations may be performed in parallel. For example, in FIG. 11, operation 1120 is illustrated as being performed before operation 1130, but the operation 1130 may be performed before the operation 1120.

Referring to FIG. 11, in operation 1110, the electronic device according to an embodiment may receive an input for transmitting a message to a satellite. The input for transmitting the message may be received based on execution of the pointing application 241 of FIG. 2. The input for transmitting the message may include an input for obtaining the message based on the execution of the pointing application 241. The message may include a multimedia message, a text message, an emergency call (SOS) message, and/or a message for indicating a position of the electronic device for transmitting to another electronic device using the satellite. However, it is not limited thereto.

Referring to FIG. 11, in operation 1120, the electronic device according to an embodiment may identify the number of characters of the message. In response to receiving the input, the electronic device may identify the number of characters using the text identifier 255 of FIG. 2. The number of characters may include a length of a string. The electronic device may identify the number of characters differently according to data on a user language (e.g., a language such as Korean or English) used to obtain the message. However, it is not limited thereto.

Referring to FIG. 11, in operation 1130, the electronic device according to an embodiment may identify an altitude intensity of the electronic device with respect to the satellite. For example, while displaying, on a display, a user interface (e.g., the user interface 120 of FIG. 1) for transmitting the message, a visual object (e.g., the visual object 122 of FIG. 1) for identifying a relative position of the satellite may be overlappingly displayed with the user interface. The electronic device may receive, from the satellite, information on a position of the satellite. The electronic device may identify an elevation angle and/or an azimuth of the satellite with respect to the electronic device based on receiving the information. As an example, the electronic device may identify the relative position of the satellite with respect to the electronic device by identifying an intensity of a signal broadcasted by the satellite and received from the satellite. However, it is not limited thereto.

For example, in the operation 1110, the electronic device may identify the number of characters of the message (e.g., the operation 1120) after identifying the altitude intensity of the electronic device with respect to the satellite (e.g., the operation 1130), based on receiving the input for transmitting the message to the satellite. However, it is not limited thereto.

For example, the electronic device may identify, using a visual object, whether a direction (e.g., the direction 711 of FIG. 7A) of the electronic device and a direction (e.g., the direction 712 of FIG. 7A) of the satellite are matched. The electronic device may identify an altitude intensity and/or an azimuth intensity of a connection between the electronic device and the satellite based on identifying that the relative position of the satellite is included within a designated region. The electronic device may identify the altitude intensity and/or the azimuth intensity based on identifying the elevation angle and/or the azimuth. The electronic device may call an API (e.g., QESDK) to be processed by a pointing application by matching the direction of the electronic device and the direction of the satellite. The API may include one or more parameters for the altitude intensity and/or the azimuth intensity. The electronic device may identify a parameter for the intensity of the connection with the satellite by obtaining the one or more parameters.

Referring to FIG. 11, in operation 1140 according to an embodiment, the electronic device may identify the time interval based on the number of characters and the altitude intensity. The electronic device may identify the time interval based on parameters respectively corresponding to the number of characters and the altitude intensity. After setting the time interval corresponding to the number of characters, the electronic device may change it to the time interval corresponding to the altitude intensity. After setting the time interval corresponding to the altitude intensity, the electronic device may change it to the time interval corresponding to the number of characters. The time interval may include a timepoint from which the electronic device transmits the message to the satellite to a timepoint at which the transmission of the message is to be completed. The electronic device may estimate the timepoint at which the transmission of the message is to be completed based on the number of characters and the altitude intensity. The electronic device may display the visual object 121 of FIG. 1 on the display to display the estimated timepoint to a user.

Referring to FIG. 11, in operation 1150, according to an embodiment, the electronic device may match the time interval to a designated ratio of a progress bar to indicate a transmission rate of the message. The progress bar may be referred to the visual object 121 of FIG. 1 and/or the visual object 910 of FIG. 9. The progress bar may include a progress indicator (e.g., the progress indicator 811 of FIG. 8). The transmission rate of the message may mean a ratio according to elapsed time from a timepoint at which the message is transmitted in the progress bar.

For example, the electronic device may match the time interval to a length corresponding to the designated ratio (e.g., 80%) of the progress bar. Both ends of the length corresponding to the designated ratio may be matched to a timepoint at which the message is transmitted and a timepoint at which an acknowledgment signal for the message is to be received from the satellite. However, it is not limited thereto.

For example, the electronic device may display the progress bar indicating the transmission rate of the message according to the elapsed time after transmitting the message until receiving the acknowledgment signal from the satellite. The electronic device may guide the user on a transmission status of the message by extending the progress indicator to the length corresponding to the designated ratio of the progress bar matched to the time interval.

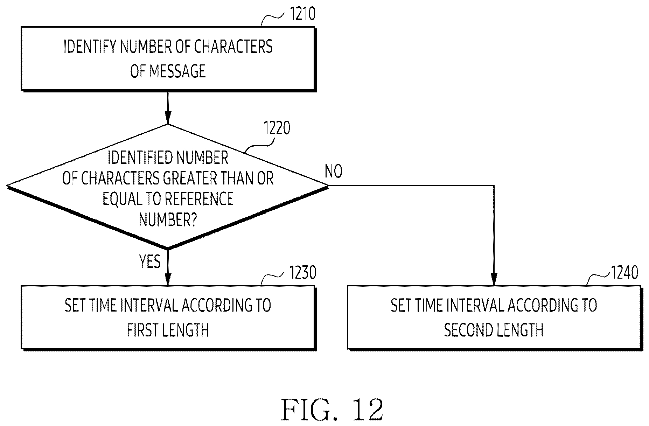

FIG. 12 illustrates an exemplary flowchart indicating an operation in which an electronic device according to an embodiment sets a time interval based on the number of characters. An electronic device of FIG. 12 may include the electronic device 101 of FIGS. 1 to 10. A satellite of FIG. 12 may be referred to the satellite 110 of FIG. 1. At least one of the operations of FIG. 12 may be performed by the electronic device 101 of FIG. 2 and/or the processor 210 of FIG. 2. Each of the operations of FIG. 12 may be performed sequentially, but is not necessarily performed sequentially. For example, an order of each of the operations may be changed, and at least two operations may be performed in parallel. At least one of the operations of FIG. 12 may be related to at least one (e.g., the operation 1120) of the operations of FIG. 11.

Referring to FIG. 12, in operation 1210, the electronic device according to an embodiment may identify the number of characters of a message. The electronic device may identify the number of characters of the message based on receiving an input indicating transmission of the message.

Referring to FIG. 12, in operation 1220, the electronic device according to an embodiment may verify whether the number of characters greater than or equal to a reference number has been identified. For example, the electronic device may verify whether a length of characters greater than or equal to a reference length has been identified. For example, the electronic device may identify the number of characters based on the number of data sets corresponding to the characters. The electronic device may verify whether a capacity of the message greater than or equal to a reference capacity has been identified, using a capacity for each of the characters. However, it is not limited thereto.

Referring to FIG. 12, when the number of characters greater than or equal to the reference number is identified (the operation 1220-Yes), in operation 1230, the electronic device according to an embodiment may set a time interval according to a first length. For example, when the number of characters is a first value (e.g., 100 or more), the time interval may have the first length. The electronic device may match the time interval set according to the first length to a length corresponding to a designated ratio (e.g., 80%) of a progress bar (e.g., a visual object based on a bar type included in the visual object 121 of FIG. 1).

Referring to FIG. 12, when the number of characters less than the reference number is identified (the operation 1220-No), in operation 1240, the electronic device according to an embodiment may set a time interval according to a second length. For example, when the number of characters is a second value (e.g., less than 100), the time interval may have the second length. For example, the second length may be set to be shorter than the first length.

For example, the electronic device may set the time interval using the number of characters included in the message. The electronic device may provide the user who transmitted an input for obtaining the message with time information when the transmission to the satellite will be completed, by setting the time interval using the number of characters.

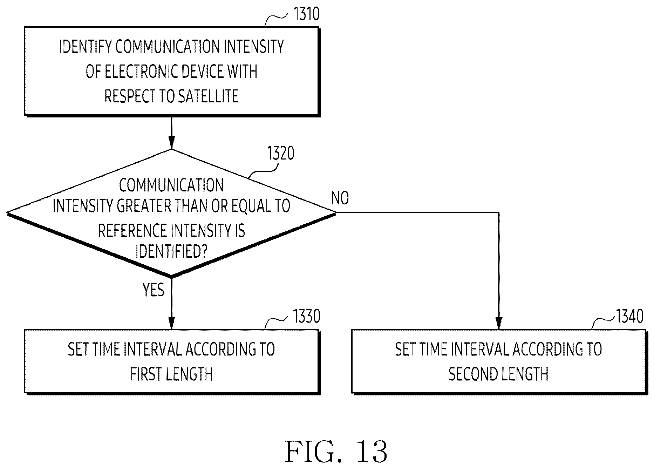

FIG. 13 illustrates an exemplary flowchart indicating an operation in which an electronic device according to an embodiment sets a time interval based on altitude intensity. An electronic device of FIG. 13 may include the electronic device 101 of FIGS. 1 to 10. A satellite of FIG. 13 may be referred to the satellite 110 of FIG. 1. At least one of the operations of FIG. 13 may be performed by the electronic device 101 of FIG. 2 and/or the processor 210 of FIG. 2. Each of the operations of FIG. 13 may be performed sequentially, but is not necessarily performed sequentially. For example, an order of each of the operations may be changed, and at least two operations may be performed in parallel. At least one of the operations of FIG. 13 may be related to at least one (e.g., the operation 1130) of the operations of FIG. 11.

Referring to FIG. 13, in operation 1310, the electronic device according to an embodiment may identify a communication intensity of the electronic device with respect to the satellite. The communication intensity may mean an intensity of a connection between the electronic device and the satellite. The communication intensity may include at least one of an altitude intensity and/or an azimuth intensity.

For example, the electronic device may identify the communication intensity by matching a direction of the electronic device and a direction of the satellite. The electronic device may set a time interval during which transmission of the message will be completed while transmitting the message to the satellite, based on identifying the communication intensity. The electronic device may transmit the message to the satellite based on matching the direction of the electronic device and the direction of the satellite. A point operation performed by the electronic device to match the direction of the electronic device and the direction of the satellite may include an operation of obtaining an intensity of a connection required to transmit the message.

Referring to FIG. 13, in operation 1320, the electronic device according to an embodiment may verify whether a communication intensity greater than or equal to a reference intensity has been identified. For example, based on identifying the communication intensity, the electronic device may display a text object on a display to maintain the direction of the electronic device so that the direction of the electronic device and the direction of the satellite are matched, using a visual object (e.g., the visual object 122 of FIG. 1).

Referring to FIG. 13, when a communication intensity greater than or equal to the reference intensity is identified (the operation 1320-Yes), in operation 1330, the electronic device according to an embodiment may set a time interval according to a first length. For example, when the communication intensity is a first value greater than or equal to the reference intensity, the time interval may be set to have the first length. By setting the time interval according to the first length, the electronic device may match the first length to a length corresponding to a designated ratio of a bar type visual object (e.g., the bar-type-based visual object included in the visual object 121 of FIG. 1). The electronic device may indicate a transmission rate of the message using a progress bar while transmitting the message, until an acknowledgment signal for the message is received from the satellite.

Referring to FIG. 13, when a communication intensity less than the reference intensity is identified (the operation 1320-No), in operation 1340, the electronic device according to an embodiment may set the time interval according to a second length. For example, when the communication intensity is a second value less than the reference intensity, the time interval may be set to have the second length. The second length may be set to be longer than the first length.

As an example, when the communication intensity is the second value indicating an intensity stronger than the first value, the time interval may have the second length. When the communication intensity is the second value indicating an intensity stronger than the first value, the second length may be set to be shorter than the first length corresponding to the first value. The electronic device may obtain a parameter (e.g., vintensity) corresponding to the altitude intensity and/or a parameter (e.g., uintensity) corresponding to the azimuth intensity by calling an API (e.g., QESDK) related to the connection with the satellite.

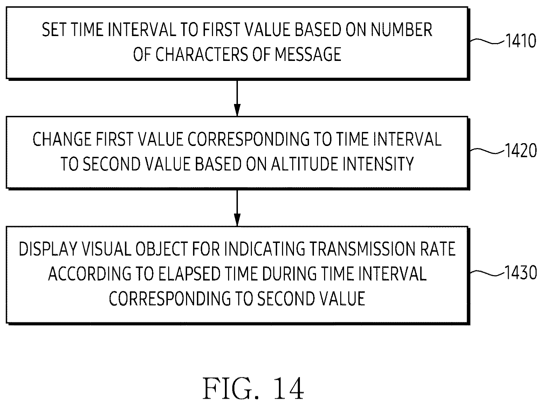

FIG. 14 illustrates an exemplary flowchart indicating an operation in which an electronic device according to an embodiment sets a time interval based on the number of characters and an altitude intensity. An electronic device of FIG. 14 may include the electronic device 101 of FIGS. 1 to 10. A satellite of FIG. 14 may be referred to the satellite 110 of FIG. 1. At least one of the operations of FIG. 14 may be performed by the electronic device 101 of FIG. 2 and/or the processor 210 of FIG. 2. Each of the operations of FIG. 14 may be performed sequentially, but is not necessarily performed sequentially. For example, an order of each of the operations may be changed, and at least two operations may be performed in parallel. At least one of the operations of FIG. 14 may be related to at least one (e.g., the operation 1140) of the operations of FIG. 11.

Referring to FIG. 14, in operation 1410, the electronic device according to an embodiment may set a time interval to a first value based on the number of characters of a message. The electronic device may identify the number of characters of the message based on receiving an input for transmitting the message to the satellite. The electronic device may set a time interval related to transmission of the message based on identifying the number of characters. The time interval may be set to the first value based on identifying the number of characters.

Referring to FIG. 14, in operation 1420, the electronic device according to an embodiment may change the first value corresponding to the time interval to a second value based on an altitude intensity. The electronic device may identify an intensity of a connection with the satellite based on setting the time interval using the first value corresponding to the number of characters. For example, the intensity of the connection with the satellite may include an altitude intensity and/or an azimuth intensity of the electronic device with respect to the satellite. The first value for the time interval may be identified based on the number of characters. The first value corresponding to the time interval may be identified based on the first value corresponding to the number of characters. As an example, the first value corresponding to the number of characters may be substantially similar to the first value corresponding to the time interval.

For example, the electronic device may identify the second value corresponding to the altitude intensity. The electronic device may identify the second value from the first value using a designated parameter (e.g., -2 to +2) based on identifying the altitude intensity. The second value may be set to be greater than the first value. As an example, when the altitude intensity is greater than the reference intensity of FIG. 13, the second value may be set to be less than the first value. However, it is not limited thereto. The electronic device may identify the altitude intensity by matching a direction of the electronic device and a direction of the satellite. Based on identifying the altitude intensity, the electronic device may set the time interval based on the second value corresponding to the altitude intensity. Based on the altitude intensity, the electronic device may change the time interval set to the first value based on the number of characters to the time interval set to the second value. The time interval may be changed from the first value to the second value based on the altitude intensity. For example, the time interval may be changed based on an intensity of a connection corresponding to the altitude intensity. The time interval may be changed based on the azimuth intensity. The second value corresponding to the altitude intensity may be substantially similar to the second value corresponding to the time interval.

Referring to FIG. 14, in operation 1430, the electronic device according to an embodiment may display a visual object for indicating a transmission rate according to elapsed time during the time interval corresponding to the second value. The visual object may be included in the visual object 121 of FIG. 1. The visual object may be referred to a progress bar based on a bar type. The visual object may include a progress indicator (e.g., the progress indicator 811 of FIG. 8) that moves according to the elapsed time. The electronic device may match the time interval corresponding to the second value to a length corresponding to a designated ratio (e.g., 80%) of the visual object. For example, the electronic device may set the length to the second value. The electronic device may adjust the time interval set based on the altitude intensity (and/or the azimuth intensity) after setting the time interval based on the number of characters. For example, the electronic device may display, on a display, the visual object indicating the time interval. The visual object indicating the time interval may be included in the visual object 121 of FIG. 1. The electronic device may display a transmission status of the message on the display using the progress indicator (e.g., the progress indicator 811 of FIG. 8) that moves according to the elapsed time. The electronic device may notify a user of the transmission status of the message in real time by setting the time interval based on the number of the characters and the altitude intensity.

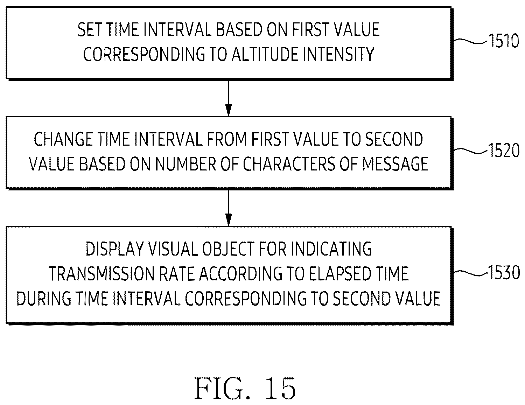

FIG. 15 is an exemplary flowchart of an operation performed by an electronic device according to an embodiment. An electronic device of FIG. 15 may include the electronic device 101 of FIGS. 1 to 10. A satellite of FIG. 15 may be referred to the satellite 110 of FIG. 1. At least one of the operations of FIG. 15 may be performed by the electronic device 101 of FIG. 2 and/or the processor 210 of FIG. 2. Each of the operations of FIG. 15 may be performed sequentially, but is not necessarily performed sequentially. For example, an order of each of the operations may be changed, and at least two operations may be performed in parallel. At least one of the operations of FIG. 15 may be related to at least one (e.g., the operation 1140) of the operations of FIG. 11.

Referring to FIG. 15, in operation 1510, the electronic device according to an embodiment may set a time interval based on a first value corresponding to an altitude intensity. The time interval may be set to the first value based on the altitude intensity. The electronic device may transmit a message to the satellite in response to an input indicating transmission of the message. As an example, responding to an input indicating the transmission of the message may mean immediately after receiving the input indicating the transmission of the message. However, it is not limited thereto.

For example, the electronic device setting the time interval based on the first value corresponding to the altitude intensity may mean identifying the altitude intensity before obtaining the message. For example, setting the time interval based on the first value corresponding to the altitude intensity may mean receiving the input indicating the transmission of the message in a state in which a connection between the electronic device and the satellite is established. However, it is not limited thereto. As an example, the first value may be set based on an intensity of the connection between the electronic device and the satellite. The first value may be set based on an azimuth intensity of the electronic device with respect to the satellite.

Referring to FIG. 15, in operation 1520, the electronic device according to an embodiment may change the time interval from the first value to a second value based on the number of characters of the message. An operation of the electronic device identifying the number of characters of the message may be related to the operation 1120 of FIG. 11. For example, when the number of characters is greater than a reference number, the time interval may be set based on a second value greater than the first value. When the number of characters is less than the reference number, the time interval may be set based on a second value less than the first value. However, it is not limited thereto. As an example, when the number of characters corresponds to the reference number, the first value may be substantially identical to the second value.

Referring to FIG. 15, in operation 1530, the electronic device according to an embodiment may display a visual object (e.g., the bar type visual object included in the visual object 121 of FIG. 1) for indicating a transmission rate according to elapsed time during the time interval corresponding to the second value. The electronic device may match the second value to a length corresponding to a designated ratio of the visual object. The electronic device may extend or move a progress indicator (e.g., the progress indicator 811 of FIG. 8) to a point corresponding to the second value while transmitting the message to the satellite.

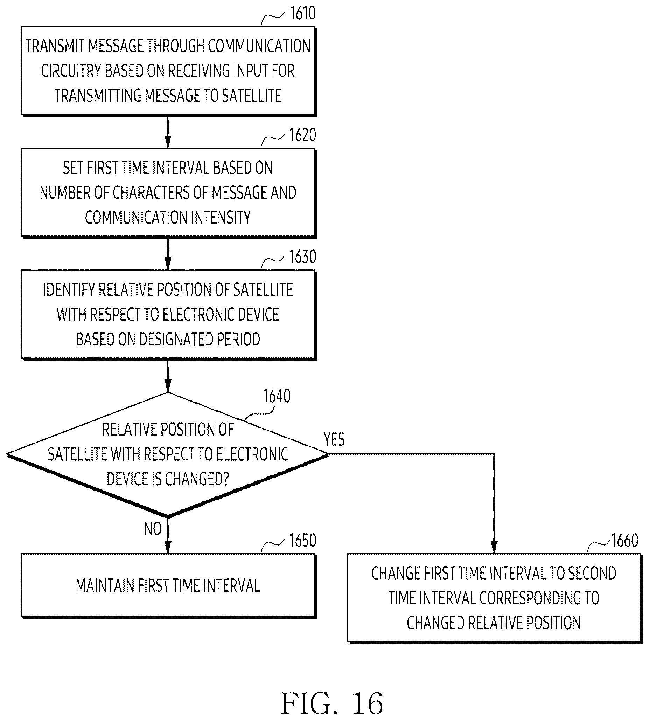

FIG. 16 illustrates an exemplary flowchart indicating an operation in which an electronic device according to an embodiment identifies a time interval based on a designated period. An electronic device of FIG. 16 may include the electronic device 101 of FIGS. 1 to 10. A satellite of FIG. 16 may be referred to the satellite 110 of FIG. 1. At least one of the operations of FIG. 16 may be performed by the electronic device 101 of FIG. 2 and/or the processor 210 of FIG. 2. Each of the operations of FIG. 16 may be performed sequentially, but is not necessarily performed sequentially. For example, an order of each of the operations may be changed, and at least two operations may be performed in parallel.

Referring to FIG. 16, in operation 1610, the electronic device according to an embodiment may transmit a message through communication circuitry based on receiving an input for transmitting the message to the satellite. To transmit the message, the electronic device may obtain data (e.g., the data 1002 or the data 1005 of FIG. 10) to be processed by a communication service (e.g., the communication service 340 of FIG. 3) from a pointing application (e.g., the pointing application 241 of FIG. 2). The electronic device may establish a connection with the satellite through the communication circuitry by processing the data using the communication service. The electronic device may display a visual object (e.g., the visual object 121 of FIG. 1) on a display to identify a relative position of the satellite with respect to the electronic device based on establishing the connection with the satellite. The electronic device may identify a direction of the electronic device using a sensor. The electronic device may transmit the message to the satellite based on identifying a match between the direction of the electronic device and a direction of the satellite.

Referring to FIG. 16, in operation 1620, the electronic device according to an embodiment may set a first time interval based on the number of characters of the message and a communication intensity. The electronic device may identify the number of characters based on execution of the text identifier 255 of FIG. 2. The electronic device may identify the communication intensity related to the connection between the electronic device and the satellite based on identifying the direction of the electronic device and the direction of the satellite. The electronic device may obtain the communication intensity using an altitude intensity related to an elevation angle of the electronic device with respect to the satellite, and an azimuth intensity corresponding to an azimuth of the electronic device with respect to the satellite.

For example, the electronic device may identify the first time interval including a time for the message transmitted by the electronic device to reach the satellite based on identifying the number of characters and the communication intensity. The electronic device may estimate the first time interval based on the number of characters and the communication intensity. The electronic device may display a visual object corresponding to the first time interval on the display. For example, the visual object may mean a visual object based on a bar type. The electronic device may match the first time interval to a portion (e.g., the portion 121-1 of FIG. 8) corresponding to a designated ratio of the bar-type-based visual object.

Referring to FIG. 16, in operation 1630, the electronic device according to an embodiment may identify the relative position of the satellite with respect to the electronic device based on a designated period. The electronic device may identify a change in the relative position of the satellite based on movement of the satellite through the communication circuitry. For example, the electronic device may identify a change in the relative position using the sensor based on movement of the electronic device.

Referring to FIG. 16, in operation 1640, whether the relative position of the satellite with respect to the electronic device according to an embodiment is changed may be identified. The electronic device may identify the relative position of the satellite with respect to the electronic device based on receiving, from the satellite through the communication circuitry, information indicating a position of the satellite. However, it is not limited thereto.

For example, the electronic device may identify for a user whether the direction of the electronic device and the direction of the satellite are matched using a visual object (e.g., the visual object 122 of FIG. 1). The electronic device may identify whether the relative position of the satellite is positioned within a designated region using the visual object. The designated region may mean a region based on a relatively strong intensity of the connection between the electronic device and the satellite.

Referring to FIG. 16, when the relative position of the satellite (the operation 1640-No) is not changed, the electronic device according to an embodiment may maintain the first time interval. The electronic device may indicate a transmission rate of the message using a visual object based on the first time interval. The electronic device may maintain a display of the visual object corresponding to the first time interval.

Referring to FIG. 16, when the relative position of the satellite (the operation 1650-Yes) is changed, the electronic device according to an embodiment may change the first time interval to a second time interval corresponding to the changed relative position. For example, the electronic device may identify the relative position of the satellite positioned outside the designated region. The electronic device may change the first time interval to the second time interval that is longer than the first time interval based on identifying the relative position of the satellite positioned outside the designated region. The electronic device may display a visual object corresponding to the second time interval, in place of the visual object corresponding to the first time interval, based on changing to the second time interval. For example, the electronic device may change a portion (e.g., the portion 121-1 of FIG. 8) corresponding to the first time interval included in the visual object (e.g., the visual object 121 of FIG. 1) to correspond to the second time interval.

For example, the electronic device may identify another relative position of the satellite based on a stronger intensity than the communication intensity for the relative position of the satellite corresponding to the first time interval. The electronic device may change the first time interval to the second time interval that is shorter than the first time interval based on identifying the change to the other relative position of the satellite. The electronic device may change the visual object indicating the transmission rate of the message related to the time interval by identifying the communication intensity related to the connection between the electronic device and the satellite based on the designated period. The electronic device may more accurately identify completion of message transmission by identifying the communication intensity based on the designated period.

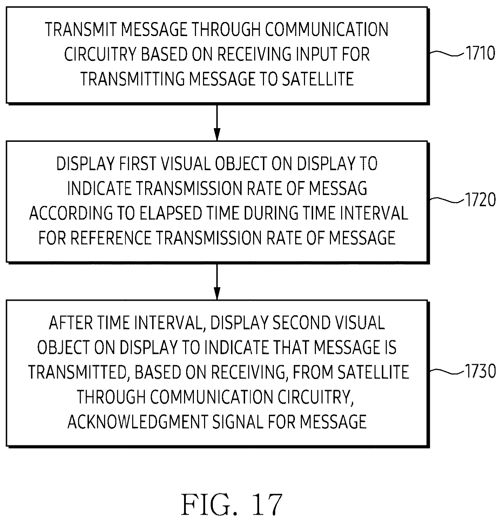

FIG. 17 illustrates an example of a flowchart of an electronic device according to an embodiment. An electronic device of FIG. 17 may include the electronic device 101 of FIGS. 1 to 10. A satellite of FIG. 17 may be referred to the satellite 110 of FIG. 1. At least one of the operations of FIG. 17 may be performed by the electronic device 101 of FIG. 2 and/or the processor 210 of FIG. 2. Each of the operations of FIG. 17 may be performed sequentially, but is not necessarily performed sequentially. For example, an order of each of the operations may be changed, and at least two operations may be performed in parallel.

Referring to FIG. 17, in operation 1710, the electronic device according to an embodiment may transmit a message through communication circuitry based on receiving an input for transmitting the message to the satellite. The electronic device may identify another input for obtaining the message based on receiving the input for transmitting the message. The electronic device may identify whether to transmit the message obtained based on the other input. The electronic device may identify whether to transmit the message based on identifying a relative position of the satellite with respect to the electronic device. The electronic device may identify, using a sensor, that the relative position of the satellite with respect to the electronic device is within a designated region. The electronic device may obtain, using the sensor, an elevation angle of the electronic device with respect to the satellite and/or an azimuth of the electronic device with respect to the satellite. The electronic device may identify the relative position of the satellite based on the elevation angle and/or the azimuth. For example, the electronic device may display a visual object (e.g., the visual object 122 of FIG. 2) on a display (e.g., the display 220 of FIG. 2) indicating that a connection with the satellite is completed based identifying that the relative position of the satellite is within the designated region. For example, the electronic device may transmit the message to the satellite based on identifying that the relative position of the satellite is within the designated region.

For example, the electronic device may identify the number of characters of the message. The electronic device may identify a time interval corresponding to the number of characters of the message based on identifying the number of characters of the message.

For example, the electronic device may obtain an altitude intensity corresponding to the elevation angle and/or an azimuth intensity corresponding to the azimuth based on identifying the elevation angle and/or the azimuth. The electronic device may identify an intensity of the connection with the satellite using a parameter related to the altitude intensity and/or a parameter indicating the azimuth intensity. The electronic device may identify a time interval related to transmission of the message based on identifying the altitude intensity, the azimuth intensity, and/or the intensity of the connection.

Referring to FIG. 17, in operation 1720, the electronic device according to an embodiment may display, on the display, a first visual object to indicate a transmission rate of the message according to elapsed time during a time interval for a reference transmission rate of the message. For example, the electronic device may identify the first visual object (e.g., the visual object 121 of FIG. 1) corresponding to the time interval. The first visual object may include a visual object (e.g., a progress bar) based on a bar type and/or a text object (e.g., sending) indicating that a message is being transmitted. The electronic device may match the time interval to a portion corresponding to a designated ratio of the bar-type-based visual object. The portion corresponding to the designated ratio may correspond to the reference transmission rate of the message. The reference transmission rate of the message may include a timepoint from which the electronic device transmits the message to the satellite to a timepoint at which an acknowledgment signal indicating completion of transmission of the message is to be received. The transmission rate of the message may correspond to a time progressing from the timepoint at which the electronic device transmits the message. The electronic device may maintain a display of the first visual object to the timepoint at which the acknowledgment signal is to be received.

Referring to FIG. 17, in operation 1730, after the time interval, the electronic device according to an embodiment may display a second visual object on the display to indicate that the message is transmitted, based on receiving, from the satellite through the communication circuitry, the acknowledgment signal for the message. The second visual object may be referred to the visual object 910 of FIG. 9. The acknowledgment signal may be referred to the acknowledgment signal 1031 of FIG. 10. The second visual object may include a visual object based on a bar type (e.g., a progress bar) and/or a text object (e.g., sent) indicating that the transmission of the message is completed. The electronic device may move a progress indicator (e.g., the progress indicator 811 of FIG. 8) included in the first visual object according to elapsed time while displaying the first visual object. The electronic device may place the progress indicator at a point (e.g., the point 121-4 of FIG. 8) corresponding to the time interval. The electronic device may place the progress indicator at the point until receiving the acknowledgment signal. The electronic device may place the progress indicator at the point 121-5 of FIG. 8 indicating that the transmission of the message is completed, independent of moving along the portion 121-2 of FIG. 8, based on receiving the acknowledgment signal. The second visual object may be referred to the visual object 910 indicating the progress indicator placed at the point 910-4 of FIG. 9. For example, the electronic device may notify a user of the completion of the transmission of the message by replacing the display of the first visual object with the second visual object. The electronic device may secure time (e.g., a margin for time) to receive the acknowledgment signal from the satellite after the time interval by matching the time interval to a portion (e.g., the portion 121-1 of FIG. 8) of the visual object 121 of FIG. 1. The electronic device may visually indicate information related to the transmission of the message more accurately by matching the time interval to the portion.

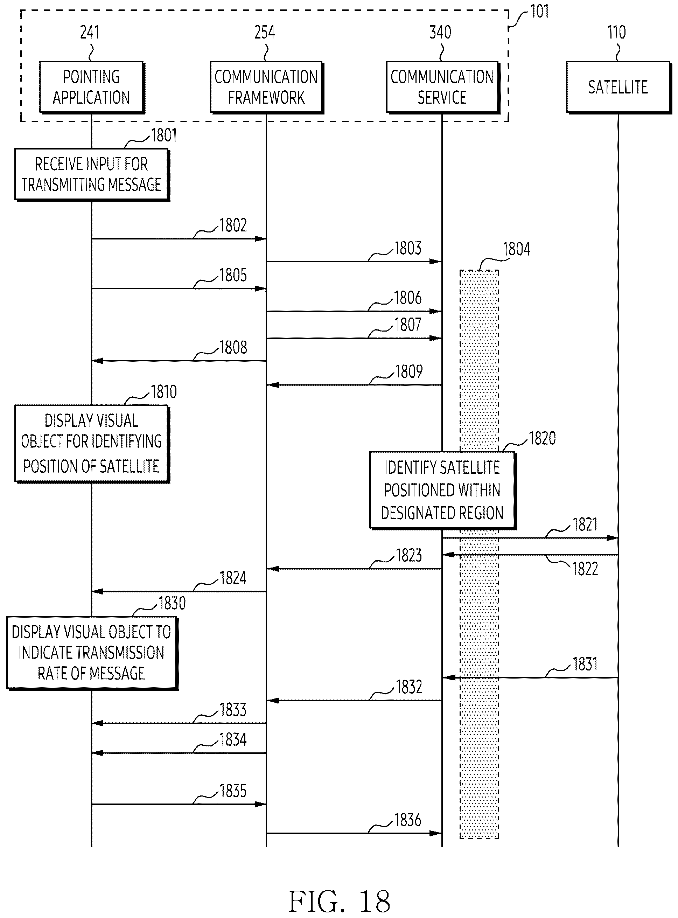

FIG. 18 illustrates an example of a signal flow between an electronic device according to an embodiment and a satellite. An electronic device 101 of FIG. 18 may include the electronic device 101 of FIGS. 1 to 10. A satellite 110 of FIG. 18 may be referred to the satellite 110 of FIG. 1. Operations performed by the electronic device 101 of FIG. 18 and/or data obtained by the electronic device 101 may be referred to the operations performed by the electronic device of FIG. 10 and/or the data obtained by the electronic device.

In operation 1801, the electronic device 101 according to an embodiment may identify an input for receiving a message, based on execution of a pointing application 241. For example, the electronic device 101 may identify the input based on receiving information on a receivable message from the satellite 110. However, it is not limited thereto. For example, the electronic device 101 may obtain data 1802 for performing a connection with the satellite based on identifying the input for receiving the message. The data 1802 may be referred to the data 1002 of FIG. 10. The electronic device may generate data 1803 to be processed by a communication service 340 using a communication framework 254, based on obtaining the data 1802. For example, the electronic device may process data between programs related to communication using the communication framework 254.

For example, the electronic device 101 may initiate a connection 1804 with the satellite 110 by controlling the data 1803 by the communication service 340. Data 1805 for receiving the message may be obtained using the pointing application 241 based on initiating the connection 1804 with the satellite 110. The electronic device 101 may obtain data 1806 to be controlled by the communication service 340 by processing the data 1805 based on the communication framework 254.

For example, the electronic device 101 may obtain data 1807 for identifying a relative position of the satellite 110 with respect to the electronic device 101 using the communication framework 254. The data 1807 may be referred to the data 1007 of FIG. 10. The electronic device may obtain data 1808 requesting a display of a user interface (e.g., the user interface 120 of FIG. 1) by the pointing application 241, based on obtaining the data 1807. In operation 1810, the electronic device 101 may display a visual object for identifying a position of the satellite based on processing the data 1808 using the pointing application 241. The visual object may be referred to the visual object 122 of FIG. 1. As an example, the electronic device 101 may display the user interface 120 of FIG. 1 based on performing the operation 1810.

For example, the electronic device 101 may obtain data 1809 indicating information on the position of the satellite 110 based on processing the data 1807 using the communication service 340. Based on obtaining the data 1809, the electronic device 101 may identify that a direction of the electronic device and a direction of the satellite are matched by controlling a sensor using the visual object.

For example, in operation 1820, the electronic device may identify, using the sensor, the satellite positioned within a designated region, based on identifying an elevation angle with respect to the satellite and/or an azimuth with respect to the satellite. The electronic device 101 may display, on a display, a visual object (e.g., the visual object 720 or the text object 745 of FIG. 9) indicating that the connection between the electronic device and the satellite is completed, based on performing the operation 1820. The electronic device may transmit a signal 1821 through communication circuitry using the communication service 340. The signal 1821 may include a request for a message to be received from the satellite 110. The electronic device may receive a message 1822 from the satellite 110 in response to the signal 1821. For example, the electronic device 101 may receive the message 1822 from a timepoint the signal 1821 is transmitted until a timepoint at which an acknowledgment signal 1831 is received. A time interval for receiving the message 1822 may be identified based on the number of characters included in the message 1822 and/or an intensity of the connection between the electronic device 101 and the satellite 110.

For example, the electronic device 101 may generate, based on receiving the message 1822, data 1823 indicating that a message is being received from the satellite 110, using the communication service 340. The electronic device 101 may obtain data 1824 to be controlled by the pointing application 241 by processing the data 1823 using the communication framework 254. In operation 1830, the electronic device 101 may display a visual object to indicate a transmission rate of the message based on obtaining the data 1824. The visual object may be referred to the visual object 121 of FIG. 1. As an example, the visual object may include a text object (e.g., reading or receiving) indicating that the message is being received. The electronic device 101 may display the visual object from a timepoint at which the data 1824 is obtained to a timepoint at which the data 1833 is to be obtained. For example, the time interval corresponding to the visual object may be identified based on the number of characters of the message and/or an intensity of the connection 1804. Information on the number of characters of the message and/or the intensity of the connection may be received from the satellite 110. However, it is not limited thereto.

For example, the electronic device 101 may receive, from the satellite 110 through the communication circuitry, the acknowledgment signal 1831 indicating that reception of the message is completed. The electronic device 101 may obtain data 1832 indicating that the reception of the message is completed based on receiving the acknowledgment signal 1831. The electronic device 101 may obtain data 1833 and 1834 to be processed by the pointing application 241 using the communication framework 254. The data 1833 may include information requesting to cease displaying the visual object (e.g., the visual object 121 of FIG. 1). The data 1834 may include information indicating that the message is received. The electronic device 101 may change the visual object for indicating the transmission rate of the message to another visual object (e.g., the visual object 910 of FIG. 9) by processing the data 1834. The changed other visual object may include a text object (e.g., read or received) indicating that the reception of the message is completed. For example, electronic device 101 may provide a user (e.g., the user 105 of FIG. 1) with the message received from satellite 110 based on obtaining the data 1834.

For example, the electronic device 101 may obtain data 1835 to be processed by the communication framework 254, based on processing the data 1834 using the pointing application 241. The data 1835 may include information requesting release of the connection 1804 with the satellite 110.

For example, the electronic device 101 may obtain data 1836 to be processed by the communication service 340, by controlling the communication framework 254 using the data 1835. Based on obtaining the data 1836, the electronic device 101 may release the connection 1804 through the communication circuitry by controlling the communication service 340. After receiving the message, the electronic device 101 may reduce power to be consumed by the connection 1804 by releasing the connection 1804.

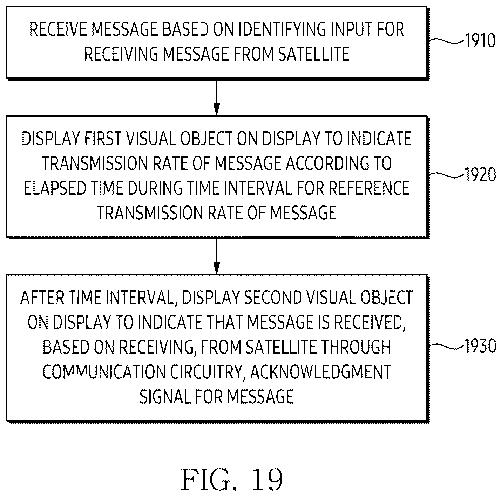

FIG. 19 illustrates an example of a flowchart of an electronic device according to an embodiment. An electronic device of FIG. 19 may include the electronic device 101 of FIGS. 1 to 10. At least one of the operations of FIG. 19 may be performed by the electronic device 101 of FIG. 2 and/or the processor 210 of FIG. 2. A satellite of FIG. 19 may be referred to the satellite 110 of FIG. 1. Each of the operations of FIG. 19 may be performed sequentially, but is not necessarily performed sequentially. For example, an order of each of the operations may be changed, and at least two operations may be performed in parallel.

Referring to FIG. 19, in operation 1910, the electronic device according to an embodiment may receive a message based on identifying an input for receiving the message from the satellite. The electronic device may perform a point operation for identifying a relative position between the electronic device and the satellite to receive the message. The electronic device may identify that the relative position of the satellite with respect to the electronic device is positioned within a designated region by performing the point operation. The electronic device may identify an altitude intensity and/or an azimuth intensity of the electronic device with respect to the satellite by performing the point operation. The electronic device may identify a time interval related to reception of the message based on identifying the altitude intensity and/or the azimuth intensity.

For example, the electronic device may receive, from a satellite, information on the number of characters of the message. The electronic device may identify the time interval related to the reception of the message based identifying the number of characters. However, it is not limited thereto.

Referring to FIG. 19, in operation 1920, the electronic device according to an embodiment may display, on a display, a first visual object to indicate a transmission rate of the message according to elapsed time during a time interval for a reference transmission rate of the message. The first visual object may be referred to the visual object 121 of FIG. 1. For example, the first visual object may include a bar type visual object and/or a text object indicating that the message is being received from the satellite.

Referring to FIG. 19, in operation 1930, after the time interval, the electronic device according to an embodiment may display, on the display, a second visual object to indicate that the message is received, based on receiving, from the satellite through communication circuitry, an acknowledgment signal for the message. The second visual object may be referred to the visual object 910 of FIG. 9. The second visual object may include a text object to indicate that the message is received. The electronic device may release a connection between the electronic device and the satellite based on receiving, from the satellite, the acknowledgment signal for the message.

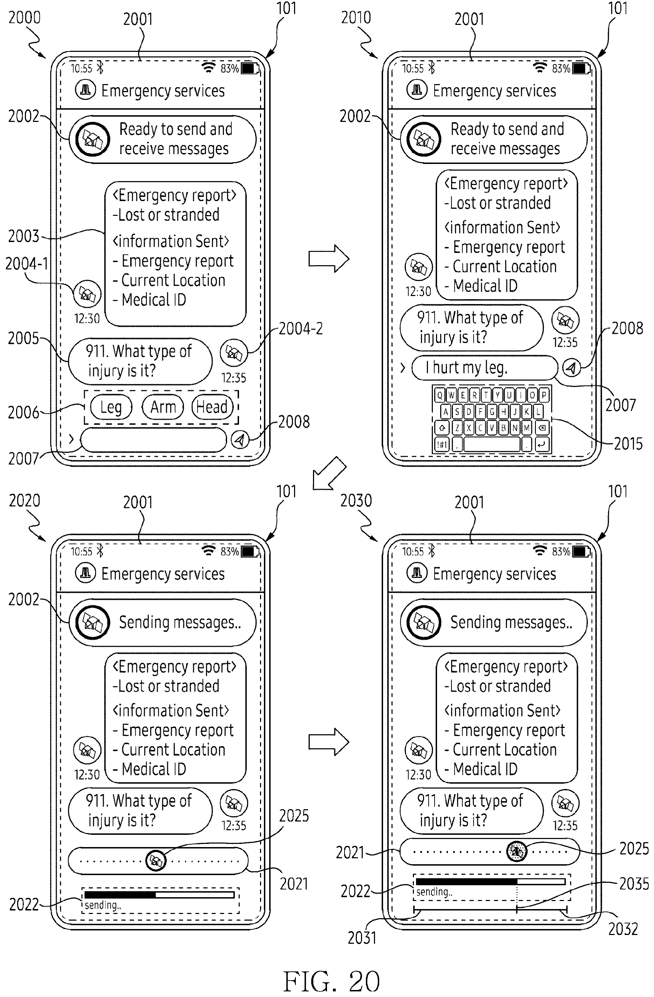

FIG. 20 illustrates an example of an operation in which an electronic device 101 according to an embodiment transmits a message. The electronic device 101 of FIG. 20 may include the electronic device 101 of FIGS. 1 to 19.

Referring to FIG. 20, in a state 2000, the electronic device 101 according to an embodiment may display a user interface 2001 for transmitting the message to a satellite (e.g., the satellite 110 of FIG. 1) on a display. The user interface 2001 may be referred to the user interface 120 of FIG. 1.

For example, the user interface 2001 may include one or more visual objects 2002, 2003, 2004-1, 2004-2, 2005, 2006, and 2007. A visual object 2002 may include text information (or a text object) (e.g., Ready to send and receive messages) indicating whether the message is transmittable. The visual object 2002 may include information indicating a connection status between the electronic device 101 and the satellite 110. The visual object 2002 may include text information indicating an emergency situation. A visual object 2003 may indicate the message transmitted from the electronic device 101 to the satellite 110. The visual object 2003 may include position information of the electronic device 101, a status of a user of the electronic device 101, and/or identification information of the electronic device 101 (or the user). The visual object 2003 may be transmitted to the satellite 110 based on a user input, or may be transmitted based on the electronic device 101 establishing a connection with the satellite 110. For example, a visual object 2005 may mean a message received from the satellite 110 to the electronic device 101. Visual objects 2004-1 and 2004-2 may indicate that transmission of the message or reception of the message is completed.

For example, the user interface 2001 may include information for transmitting or receiving a message based on a satellite communication service using the satellite 110, or another communication service (e.g., a cellular network or a short-range wireless network), different from the satellite communication service, available to the electronic device 101. For example, when the message transmits and receives an emergency message by using the satellite communication service using the satellite 110, the visual objects 2004-1 and 2004-2 may be displayed as an icon related to the satellite. For example, when the electronic device 101 transmits and receives the emergency message using a cellular network, the visual objects 2004-1 and 2004-2 may be changed to an icon related to the cellular network. However, it is not limited thereto.

A visual object 2006 may include icons including text information indicating body parts of the user. The visual object 2006 may be generated based on text information included in the visual object 2005. The visual object 2006 may mean an answer corresponding to the text information included in the visual object 2005. However, it is not limited thereto. As an example, the visual object 2003 and/or a visual object 2004 may be referred to as a message bubble.

For example, a visual object 2007 may be used to display text information based on a user input. The electronic device 101 may display a keyboard indicating a character for displaying the text information in the visual object 2007 based on receiving the input for the visual object 2007. The visual object 2007 may be referred to as an input window. A visual object 2008 may be used to transmit the message using the text information included in the visual object 2007.

For example, in a state 2010, the electronic device 101 may display a keyboard 2015 overlapping at least a portion of the user interface 2001, based on receiving the input for the visual object 2007. The electronic device 101 may obtain text information to be transmitted to the satellite 110 using the keyboard 2015. The text information may be displayed using the visual object 2007. The text information may include a sentence indicating the status of the user. However, it is not limited thereto.

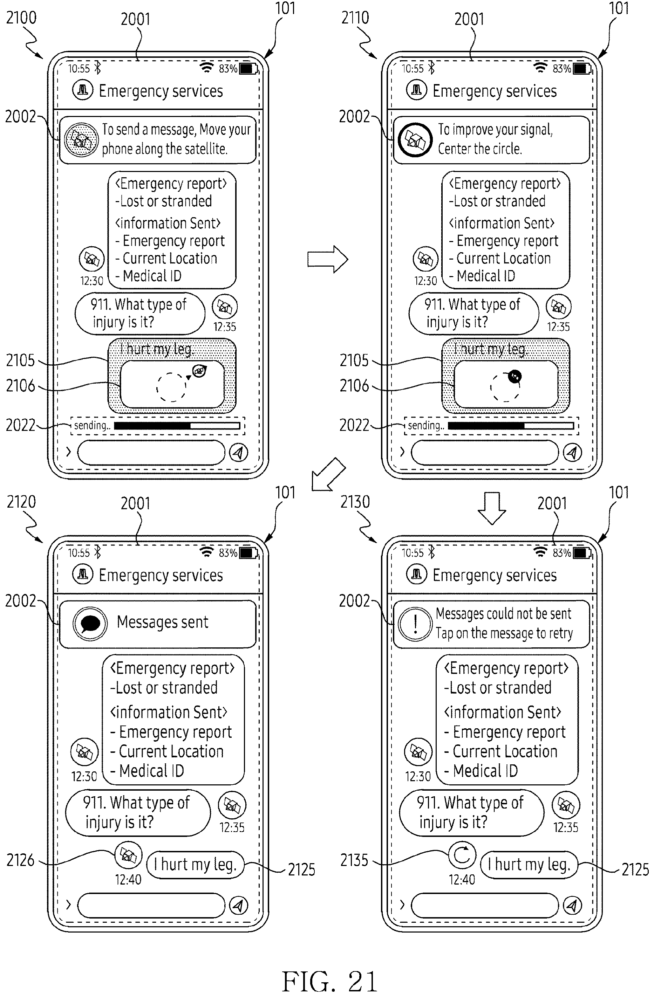

For example, the electronic device 101 may receive an input for the visual object 2008 indicating that a message corresponding to the text information included in the visual object 2007 is transmitted to the satellite. The electronic device 101 may transmit the message corresponding to the text information obtained using the visual object 2007 to the satellite based on receiving the input for the visual object 2008. The electronic device 101 may display a visual object (e.g., a visual object 2125 to be described later in FIG. 21) on the display based on receiving the input. The visual object (e.g., the visual object 2125 to be described later in FIG. 21) may be referred to as a message bubble.

For example, in a state 2020, the electronic device 101 may display a visual object 2025 indicating that the message corresponding to the text information included in the visual object 2007 is transmitted based on receiving the input for the visual object 2008. For example, in a region adjacent to the visual object (e.g., the visual object 2125 to be described later in FIG. 21) indicating the message, the electronic device 101 may display at least one of a visual object 2022 or the visual object 2025 indicating a relative position with respect to the satellite. As an example, the electronic device 101 may overlappingly display the visual object 2025 on the visual object (e.g., a message bubble) indicating the message.

For example, the visual object 2025 may indicate a transmission status of the message to be transmitted to the satellite 110. The visual object 2025 may indicate a relative position of the electronic device 101 and the satellite 110. The electronic device 101 may provide the user with the relative position of the satellite 110 by using the visual object 2025. As an example, when a position of the satellite 110 is changed, the electronic device 101 may change a position of the visual object 2025 based on the changed position of the satellite 110. For example, when the changed position of the satellite 110 is included outside a designated range, the electronic device 101 may change the visual object 2025 to a visual object (e.g., a visual object 2106 to be described later in FIG. 21) for performing a point operation. The visual object 2025 may be overlappingly displayed on the visual object (e.g., the visual object 2125 to be described later in FIG. 21) indicating the message. The electronic device 101 may overlappingly display the visual object 2025 and the visual object (e.g., the visual object 2125 to be described later in FIG. 21) based on adjusting an alpha value (e.g., a parameter indicating transparency) for the visual object 2025.

For example, a visual object 2021 may correspond to the visual object 2022, and the visual object 2022 may be referred to the visual object 121 of FIG. 1. For example, the visual object 2022 may be generated based on the number of characters and/or a communication status with the satellite 110. The visual object 2022 may be obtained based on a UI indicating a message bubble, such as the visual objects 2003 and 2005. For example, the visual object 2022 may be displayed adjacent to the visual object indicating the message to be transmitted from the electronic device 101 to the satellite 110. The visual object 2022 may be obtained based on time information corresponding to the message to be transmitted from the electronic device 101 to the satellite 110. The electronic device 101 may change the position of the visual object 2025 according to a moving direction of the satellite to notify the user of the connection status between the electronic device 101 and the satellite 110 and/or the position of the satellite.

For example, the electronic device 101 may change the visual object 2002 to include text information indicating transmission of the message based on receiving the input for the visual object 2008. In the state 2020, while the electronic device 101 transmits the message to the satellite, the visual object 2002 may include the text information (e.g., Sending message) indicating the transmission of the message and/or an icon indicating the connection status between the electronic device 101 and the satellite 110. However, it is not limited thereto.

For example, in a state 2030, the electronic device 101 may identify that an estimated timepoint included in the time information (or a time interval) has been reached according to time elapsed while transmitting the message to the satellite 110. The estimated timepoint may correspond to a point 2035. The visual object 2022 may be divided into a portion 2031 and a portion 2032 based on the estimated point 2035. The portion 2031 may be referred to the portion 910-1 of FIG. 9. The portion 2032 may be referred to the portion 910-2 of FIG. 9. The electronic device 101 may guide that it is waiting for receiving an acknowledgment signal from the satellite 110 based on identifying that the estimated time point has been reached. However, it is not limited thereto.

For example, the electronic device 101 may identify that the relative position of the satellite 110 has departed from the designated region (e.g., the designated region 730 in FIG. 7A) while transmitting the message. The electronic device 101 may notify the user of a state in which the relative position of the satellite 110 has departed from the designated region. For example, the electronic device 101 may notify a state in which the relative position of the satellite 110 has departed from the designated region (e.g., the designated region 730 in FIG. 7A) using the visual object 2025. For example, the electronic device 101 may provide the state to the user based on changing a color of the visual object 2025 or further displaying another visual object (e.g., a visual object indicating a warning such as an exclamation mark) in the visual object 2025. For example, when the relative position of the satellite 110 has departed from the designated region (e.g., the designated region 730 of FIG. 7A), the electronic device 101 may provide a service for performing a point operation using the visual object 2021.

Hereinafter, in FIG. 21, an operation in which the electronic device 101 notifies the user of a state in which the relative position of the satellite 110 has departed from the designated region is described.

FIG. 21 illustrates an example of a user interface 2001 for an electronic device according to an embodiment to transmit a message to a satellite. Referring to FIG. 21, an electronic device 101 of FIG. 21 may include the electronic device 101 of FIGS. 1 to 20. States 2100, 2110, 2120, and 2130 of FIG. 21 may be related to at least one of the states 2000, 2010, 2020, and 2030 of FIG. 20.

Referring to FIG. 21, in a state 2100, the electronic device 101 according to an embodiment may display one or more visual objects 2002, 2015, 2016, and 2022 indicating transmission of the message using the user interface 2001 to transmit the message to the satellite (e.g., the satellite 110 of FIG. 1).

For example, the electronic device 101 may identify a relative position with the satellite 110 while transmitting the message to the satellite 110. When the relative position of the satellite 110 has departed from a designated region, the electronic device 101 may change a visual object (e.g., the visual object 2021 of FIG. 20) to a visual object 2105. The electronic device 101 may guide the relative position to a user using a visual object 2106 included in the visual object 2105 indicating the message. The visual object 2106 may be referred to the user interface 705 included in a state (e.g., the state 705 of FIG. 7A). When the relative position of the satellite 110 has departed from the designated region, the electronic device 101 may temporarily cease transmission of the message.

For example, when the relative position of the satellite 110 has departed from the designated region, the electronic device 101 may change a visual object 2002 to include text information (e.g., To send a message, Move your phone along the satellite) indicating the relative position of the satellite 110 that has departed from the designated region and/or an icon indicating a connection status between the electronic device 101 and the satellite 110. However, it is not limited thereto. A color of at least a portion of the changed visual object 2002 may be different from a color of at least a portion of the visual object 2002 (e.g., the visual object including text information indicating a connection between the electronic device 101 and the satellite 110) of FIG. 20.

For example, in a state 2110, the electronic device 101 may guide the user to identify that the relative position of the satellite 110 has entered the designated region, and to position the electronic device within the designated region to improve a communication intensity. The electronic device 101 may change the visual object 2002 based on identifying that the relative position of the satellite 110 is positioned within at least a portion of the designated region using a sensor and/or communication circuitry. The visual object 2002 may include text information (e.g., To improve your signal, Center the circle) for guiding the user to improve a communication status of the electronic device 101 and the satellite 110 and/or an icon indicating the connection status between the electronic device 101 and the satellite 110. In the state 2110, the electronic device 101 may initiate the transmission of the message that was temporarily ceased.

For example, a state 2120 may include a state indicating that the transmission of the message is completed in the electronic device 101. The electronic device 101 may display, on a display, a visual object 2126 indicating that the transmission of the message is completed, together with a visual object 2125 indicating the message based on receiving an acknowledgment signal from the satellite 110 indicating that the transmission of the message is completed. The electronic device 101 may change the visual object 2105 (or the visual object 2021 indicating a progress bar) to the visual object 2125 including text information based on receiving the acknowledgment signal. For example, the changed visual object 2125 may be displayed together with the visual object 2126 indicating the satellite 110 used to transmit the message and/or time information indicating a time when the message was transmitted.

For example, the electronic device 101 may change the visual object 2002 and/or an icon related to a transmission status of the message using text information (e.g., Messages sent) indicating that the transmission of the message is completed. The electronic device 101 may notify the user that the message is transmitted to the satellite 110 using the visual objects 2002, 2125 and 2126.

For example, a state 2130 may include a state indicating that the transmission of the message has failed in the electronic device 101. When the relative position of the satellite 110 maintains in a state of being departed from the designated region, the electronic device 101 may display a visual object 2135 on the display to indicate that the transmission of the message is not completed. The electronic device 101 may initiate the transmission of the message based on receiving an input for the visual object 2135 (e.g., a resend icon). The electronic device 101 may change the visual object 2002 and/or an icon related to the transmission status of the message using text information (e.g., Messages could not be sent. Tap on the message to retry) indicating that the transmission of the message has failed. The electronic device 101 may display the visual object 2002 on the display to guide the user to resend the message. However, it is not limited thereto.

As described above, the electronic device 101 according to an embodiment may provide the user with an environment in which the message may be transmitted to the satellite 110 using the user interface 2001 related to an emergency situation. The electronic device 101 may notify the user of the transmission status of the message more conveniently by using a visual object (e.g., the visual object 2021 of FIG. 20) indicating a progress bar in the user interface 2001.

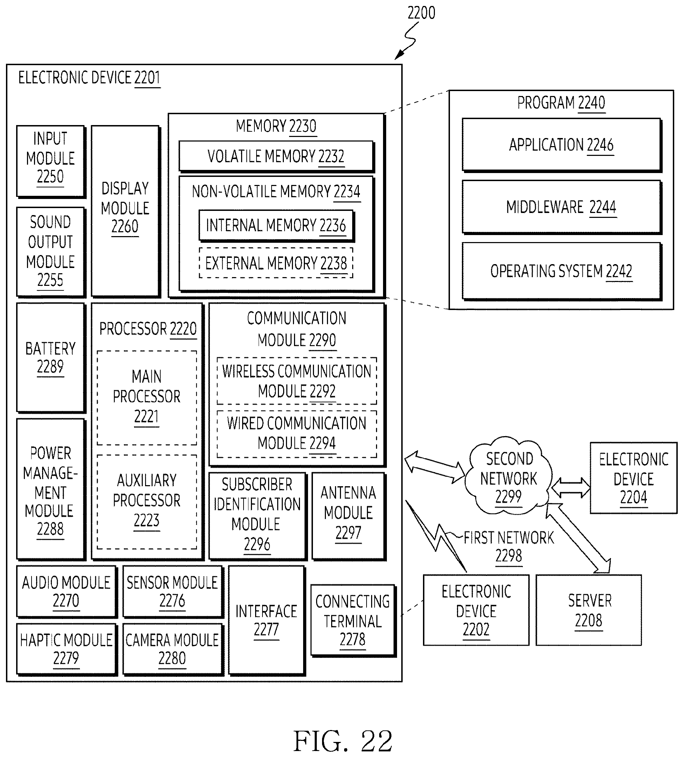

FIG. 22 is a block diagram illustrating an electronic device 2201 in a network environment 2200 according to various embodiments. Referring to FIG. 22, the electronic device 2201 in the network environment 2200 may communicate with an electronic device 2202 via a first network 2298 (e.g., a short-range wireless communication network), or at least one of an electronic device 2204 or a server 2208 via a second network 2299 (e.g., a long-range wireless communication network). According to an embodiment, the electronic device 2201 may communicate with the electronic device 2204 via the server 2208. According to an embodiment, the electronic device 2201 may include a processor 2220, memory 2230, an input module 2250, a sound output module 2255, a display module 2260, an audio module 2270, a sensor module 2276, an interface 2277, a connecting terminal 2278, a haptic module 2279, a camera module 2280, a power management module 2288, a battery 2289, a communication module 2290, a subscriber identification module(SIM) 2296, or an antenna module 2297. In some embodiments, at least one of the components (e.g., the connecting terminal 2278) may be omitted from the electronic device 2201, or one or more other components may be added in the electronic device 2201. In some embodiments, some of the components (e.g., the sensor module 2276, the camera module 2280, or the antenna module 2297) may be implemented as a single component (e.g., the display module 2260).

The processor 2220 may execute, for example, software (e.g., a program 2240) to control at least one other component (e.g., a hardware or software component) of the electronic device 2201 coupled with the processor 2220, and may perform various data processing or computation. According to an embodiment, as at least part of the data processing or computation, the processor 2220 may store a command or data received from another component (e.g., the sensor module 2276 or the communication module 2290) in volatile memory 2232, process the command or the data stored in the volatile memory 2232, and store resulting data in non-volatile memory 2234. According to an embodiment, the processor 2220 may include a main processor 2221 (e.g., a central processing unit (CPU) or an application processor (AP)), or an auxiliary processor 2223 (e.g., a graphics processing unit (GPU), a neural processing unit (NPU), an image signal processor (ISP), a sensor hub processor, or a communication processor (CP)) that is operable independently from, or in conjunction with, the main processor 2221. For example, when the electronic device 2201 includes the main processor 2221 and the auxiliary processor 2223, the auxiliary processor 2223 may be adapted to consume less power than the main processor 2221, or to be specific to a specified function. The auxiliary processor 2223 may be implemented as separate from, or as part of the main processor 2221.

The auxiliary processor 2223 may control at least some of functions or states related to at least one component (e.g., the display module 2260, the sensor module 2276, or the communication module 2290) among the components of the electronic device 2201, instead of the main processor 2221 while the main processor 2221 is in an inactive (e.g., sleep) state, or together with the main processor 2221 while the main processor 2221 is in an active state (e.g., executing an application). According to an embodiment, the auxiliary processor 2223 (e.g., an image signal processor or a communication processor) may be implemented as part of another component (e.g., the camera module 2280 or the communication module 2290) functionally related to the auxiliary processor 2223. According to an embodiment, the auxiliary processor 2223 (e.g., the neural processing unit) may include a hardware structure specified for artificial intelligence model processing. An artificial intelligence model may be generated by machine learning. Such learning may be performed, e.g., by the electronic device 2201 where the artificial intelligence is performed or via a separate server (e.g., the server 2208). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 2230 may store various data used by at least one component (e.g., the processor 2220 or the sensor module 2276) of the electronic device 2201. The various data may include, for example, software (e.g., the program 2240) and input data or output data for a command related thereto. The memory 2230 may include the volatile memory 2232 or the non-volatile memory 2234.

The program 2240 may be stored in the memory 2230 as software, and may include, for example, an operating system (OS) 2242, middleware 2244, or an application 2246.

The input module 2250 may receive a command or data to be used by another component (e.g., the processor 2220) of the electronic device 2201, from the outside (e.g., a user) of the electronic device 2201. The input module 2250 may include, for example, a microphone, a mouse, a keyboard, a key (e.g., a button), or a digital pen (e.g., a stylus pen).

The sound output module 2255 may output sound signals to the outside of the electronic device 2201. The sound output module 2255 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 2260 may visually provide information to the outside (e.g., a user) of the electronic device 2201. The display module 2260 may include, for example, a display, a hologram device, or a projector and control circuitry to control a corresponding one of the display, hologram device, and projector. According to an embodiment, the display module 2260 may include a touch sensor adapted to detect a touch, or a pressure sensor adapted to measure the intensity of force incurred by the touch.

The audio module 2270 may convert a sound into an electrical signal and vice versa. According to an embodiment, the audio module 2270 may obtain the sound via the input module 2250, or output the sound via the sound output module 2255 or a headphone of an external electronic device (e.g., an electronic device 2202) directly (e.g., wiredly) or wirelessly coupled with the electronic device 2201.

The sensor module 2276 may detect an operational state (e.g., power or temperature) of the electronic device 2201 or an environmental state (e.g., a state of a user) external to the electronic device 2201, and then generate an electrical signal or data value corresponding to the detected state. According to an embodiment, the sensor module 2276 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 2277 may support one or more specified protocols to be used for the electronic device 2201 to be coupled with the external electronic device (e.g., the electronic device 2202) directly (e.g., wiredly) or wirelessly. According to an embodiment, the interface 2277 may include, for example, a high definition multimedia interface (HDMI), a universal serial bus (USB) interface, a secure digital (SD) card interface, or an audio interface.

A connecting terminal 2278 may include a connector via which the electronic device 2201 may be physically connected with the external electronic device (e.g., the electronic device 2202). According to an embodiment, the connecting terminal 2278 may include, for example, an HDMI connector, a USB connector, an SD card connector, or an audio connector (e.g., a headphone connector).

The haptic module 2279 may convert an electrical signal into a mechanical stimulus (e.g., a vibration or a movement) or electrical stimulus which may be recognized by a user via his tactile sensation or kinesthetic sensation. According to an embodiment, the haptic module 2279 may include, for example, a motor, a piezoelectric element, or an electric stimulator.

The camera module 2280 may capture a still image or moving images. According to an embodiment, the camera module 2280 may include one or more lenses, image sensors, image signal processors, or flashes.

The power management module 2288 may manage power supplied to the electronic device 2201. According to an embodiment, the power management module 2288 may be implemented as at least part of, for example, a power management integrated circuit (PMIC).

The battery 2289 may supply power to at least one component of the electronic device 2201. According to an embodiment, the battery 2289 may include, for example, a primary cell which is not rechargeable, a secondary cell which is rechargeable, or a fuel cell.

The communication module 2290 may support establishing a direct (e.g., wired) communication channel or a wireless communication channel between the electronic device 2201 and the external electronic device (e.g., the electronic device 2202, the electronic device 2204, or the server 2208) and performing communication via the established communication channel. The communication module 2290 may include one or more communication processors that are operable independently from the processor 2220 (e.g., the application processor (AP)) and supports a direct (e.g., wired) communication or a wireless communication. According to an embodiment, the communication module 2290 may include a wireless communication module 2292 (e.g., a cellular communication module, a short-range wireless communication module, or a global navigation satellite system (GNSS) communication module) or a wired communication module 2294 (e.g., a local area network (LAN) communication module or a power line communication (PLC) module). A corresponding one of these communication modules may communicate with the external electronic device via the first network 2298 (e.g., a short-range communication network, such as Bluetooth^{™}, wireless-fidelity (Wi-Fi) direct, or infrared data association (IrDA)) or the second network 2299 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 2292 may identify and authenticate the electronic device 2201 in a communication network, such as the first network 2298 or the second network 2299, using subscriber information (e.g., international mobile subscriber identity (IMSI)) stored in the subscriber identification module 2296.

The wireless communication module 2292 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 2292 may support a high-frequency band (e.g., the mmWave band) to achieve, e.g., a high data transmission rate. The wireless communication module 2292 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 2292 may support various requirements specified in the electronic device 2201, an external electronic device (e.g., the electronic device 2204), or a network system (e.g., the second network 2299). According to an embodiment, the wireless communication module 2292 may support a peak data rate (e.g., 20Gbps or more) for implementing eMBB, loss coverage (e.g., 2264dB or less) for implementing mMTC, or U-plane latency (e.g., 0.5ms or less for each of downlink (DL) and uplink (UL), or a round trip of 22ms or less) for implementing URLLC.

The antenna module 2297 may transmit or receive a signal or power to or from the outside (e.g., the external electronic device) of the electronic device 2201. According to an embodiment, the antenna module 2297 may include an antenna including a radiating element composed of a conductive material or a conductive pattern formed in or on a substrate (e.g., a printed circuit board (PCB)). According to an embodiment, the antenna module 2297 may include a plurality of antennas (e.g., array antennas). In such a case, at least one antenna appropriate for a communication scheme used in the communication network, such as the first network 2298 or the second network 2299, may be selected, for example, by the communication module 2290 (e.g., the wireless communication module 2292) from the plurality of antennas. The signal or the power may then be transmitted or received between the communication module 2290 and the external electronic device via the selected at least one antenna. According to an embodiment, another component (e.g., a radio frequency integrated circuit (RFIC)) other than the radiating element may be additionally formed as part of the antenna module 2297.

According to various embodiments, the antenna module 2297 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 2201 and the external electronic device 2204 via the server 2208 coupled with the second network 2299. Each of the electronic devices 2202 or 2204 may be a device of a same type as, or a different type, from the electronic device 2201. According to an embodiment, all or some of operations to be executed at the electronic device 2201 may be executed at one or more of the external electronic devices 2202, 2204, or 2208. For example, if the electronic device 2201 should perform a function or a service automatically, or in response to a request from a user or another device, the electronic device 2201, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 2201. The electronic device 2201 may provide the outcome, with or without further processing of the outcome, as at least part of a reply to the request. To that end, a cloud computing, distributed computing, mobile edge computing (MEC), or client-server computing technology may be used, for example. The electronic device 2201 may provide ultra low-latency services using, e.g., distributed computing or mobile edge computing. In another embodiment, the external electronic device 2204 may include an internet-of-things (IoT) device. The server 2208 may be an intelligent server using machine learning and/or a neural network. According to an embodiment, the external electronic device 2204 or the server 2208 may be included in the second network 2299. The electronic device 2201 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 2240) including one or more instructions that are stored in a storage medium (e.g., internal memory 2236 or external memory 2238) that is readable by a machine (e.g., the electronic device 2201). For example, a processor (e.g., the processor 2220) of the machine (e.g., the electronic device 2201) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

The electronic device 2201 of FIG. 22 may be referred to the electronic device 101 of FIGS. 1 to 21.

An electronic device according to an embodiment may obtain time information for transmitting a message to a satellite. The electronic device may obtain the time information based on the number of characters of the message and/or a communication status between the electronic device and the satellite. A method for displaying a visual object corresponding to the time information may be required based on the electronic device receiving an input for transmitting the message.

In an electronic device 101 according to an embodiment as described above, the electronic device may comprise a display 220, a sensor 230, communication circuitry 235, at least one processor 210 comprising processing circuitry, and memory 215 comprising one or more storage mediums storing instructions. The instructions, when executed by the at least one processor individually or collectively, may cause the electronic device to transmit, based on receiving an input for transmitting a message to a satellite 110, the message through the communication circuitry. The instructions, when executed by the at least one processor individually or collectively, may cause the electronic device to display, on the display, a first visual object 121 to indicate a transmission rate of the message according to elapsed time during a time interval for a reference transmission rate of the message. The instructions, when executed by the at least one processor individually or collectively, may cause the electronic device to, after the time interval, display, on the display, a second visual object 910 to indicate that the message is transmitted, based on receiving, from the satellite through the communication circuitry, an acknowledgment signal 1031 for the message. The time interval may be identified based on an altitude intensity obtained using the sensor of the electronic device with respect to the satellite.

For example, for transmitting the message, the instructions, when executed by the at least one processor individually or collectively, may cause the electronic device to obtain, using the sensor, an elevation angle 501 of the electronic device with respect to the satellite and an azimuth 725 of the electronic device with respect to the satellite. For transmitting the message, the instructions, when executed by the at least one processor individually or collectively, may cause the electronic device to display a third visual object 122 or 720 to indicate that a connection with the satellite is completed based on identifying, based on the elevation angle and the azimuth, that a relative position 710 of the satellite with respect to the electronic device is within a designated region 730. The first visual object may be displayed after the third visual object is displayed.

For example, for displaying the first visual object, the instructions, when executed by the at least one processor individually or collectively, may cause the electronic device to identify a relative position of the satellite with respect to the electronic device based on receiving information indicating a position of the satellite from the satellite through the communication circuitry. For displaying the first visual object, the instructions, when executed by the at least one processor individually or collectively, may cause the electronic device to change the time interval according to a change in the relative position.

For example, the time interval may be identified based on the number of characters of the message, an altitude intensity of the electronic device, and an azimuth intensity of the electronic device with respect to the satellite.

For example, for displaying the third visual object, the instructions, when executed by the at least one processor individually or collectively, may cause the electronic device to identify the altitude intensity corresponding to the elevation angle and the azimuth intensity corresponding to the azimuth based on identifying that the relative position of the satellite with respect to the electronic device is within the designated region.

For example, when the number of characters is a first value, the time interval may have a first length. When the number of characters is a second value greater than the first value, the time interval may have a second length. The second length may be set to be longer than the first length.

For example, when the altitude intensity is a third value, the time interval may have a third length. When the altitude intensity is a fourth value indicating a stronger intensity than the third value, the time interval may have a fourth length. The fourth length may be set to be shorter than the third length.

For example, the first visual object may include a bar type visual object for indicating the transmission rate of the message and a text object indicating that transmission is in progress. The second visual object may include the bar type visual object indicating completion of the message transmission and a text object indicating that the message is transmitted.

For example, the time interval may be set to a fifth value based on identifying the number of characters of the message. The time interval may be changed from the fifth value to a sixth value based on the altitude intensity.

As described above, in a method performed by an electronic device 101 according to an embodiment, the method may comprise transmitting, based on receiving an input for transmitting a message to a satellite 110, the message through communication circuitry 235. The method may comprise displaying, on a display 220, a first visual object 121 to indicate a transmission rate of the message according to elapsed time during a time interval for a reference transmission rate of the message. The method may comprise, after the time interval, displaying, on the display, a second visual object 910 to indicate that the message is transmitted, based on receiving, from the satellite through the communication circuitry, an acknowledgment signal 1031 for the message. The time interval may be identified based on an altitude intensity obtained using a sensor 230 of the electronic device with respect to the satellite.

For example, transmitting the message may comprise obtaining, using the sensor, an elevation angle 501 of the electronic device with respect to the satellite and an azimuth 725 of the electronic device with respect to the satellite. Transmitting the message may further comprise displaying a third visual object 122 or 720 to indicate that a connection with the satellite is completed based on identifying, based on the elevation angle and the azimuth, that a relative position 710 of the satellite with respect to the electronic device is within a designated region 730. The first visual object may be displayed after the third visual object is displayed.

For example, displaying the first visual object may comprise identifying a relative position of the satellite with respect to the electronic device based on receiving information indicating a position of the satellite from the satellite through the communication circuitry. Displaying the first visual object may comprise changing the time interval according to a change in the relative position.

For example, the time interval may be identified based on the number of characters of the message, an altitude intensity of the electronic device, and an azimuth intensity of the electronic device with respect to the satellite.

For example, displaying the third visual object may comprise identifying the altitude intensity corresponding to the elevation angle and the azimuth intensity corresponding to the azimuth based on identifying that the relative position of the satellite with respect to the electronic device is within the designated region.

For example, when the number of characters is a first value, the time interval may have a first length. When the number of characters is a second value greater than the first value, the time interval may have a second length. The second length may be set to be longer than the first length.

For example, when the altitude intensity is the first value, the time interval may have the first length. When the altitude intensity is the second value indicating a stronger intensity than the first value, the time interval may have the second length. The second length may be set to be shorter than the first length.

For example, the first visual object may include a bar type visual object for indicating the transmission rate of the message and a text object indicating that transmission is in progress. The second visual object may include the bar type visual object indicating completion of the message transmission and a text object indicating that the message is transmitted.

For example, the time interval may be set to the first value based on identifying the number of characters of the message. The time interval may be changed from the first value to the second value based on the altitude intensity.

For example, displaying the first visual object on the display may comprise displaying, in a region adjacent to a fourth visual object 2125 indicating the message, at least one of the first visual object or a fifth visual object 2025 indicating a relative position with respect to the satellite.

For example, displaying the first visual object on the display may comprise displaying a sixth visual object 2106 indicating the relative position based on identifying that the relative position of the satellite is outside the designated region.

In an electronic device 101 according to an embodiment as described above, the electronic device may comprise a display 220, a sensor 230, communication circuitry 235, at least one processor 210 comprising processing circuitry, and memory 215 comprising one or more storage mediums storing instructions. The instructions, when executed by the at least one processor individually or collectively, may cause the electronic device to receive, based on identifying an input for receiving a message from a satellite 110, the message through the communication circuitry. The instructions, when executed by the at least one processor individually or collectively, may cause the electronic device to display, on the display, a first visual object to indicate a transmission rate of the message according to elapsed time during a time interval for a reference transmission rate of the message. The instructions, when executed by the at least one processor individually or collectively, may cause the electronic device to, after the time interval, display, on the display, a second visual object to indicate that the message is received, based on receiving, from the satellite through the communication circuitry, an acknowledgment signal 1031 for the message. The time interval may be identified based on the number of characters in the message and an altitude intensity obtained using the sensor of the electronic device with respect to the satellite.

For example, for displaying the second visual object, the instructions, when executed by the at least one processor individually or collectively, may cause the electronic device to disconnect a connection 1804 between the satellite and the electronic device based on displaying the second visual object to indicate that the message is received.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include a magnetic medium such as a hard disk, floppy disk, and magnetic tape, optical recording medium such as a CD-ROM and DVD, magneto-optical medium, such as a floptical disk, and those configured to store program instructions, including ROM, RAM, flash memory, and the like. In addition, examples of other media may include recording media or storage media managed by app stores that distribute applications, sites that supply or distribute various software, servers, and the like.

Although the embodiments have been described above with reference to limited examples and drawings, various modifications and variations may be made from the above description by those skilled in the art. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

Therefore, other implementations, other embodiments, and those equivalent to the scope of the claims are in the scope of the claims described later.

## Claims

1. An electronic device (101) comprising:
a display (220);
a sensor (230);
communication circuitry (235);
at least one processor (210) comprising processing circuitry; and
memory (215) comprising one or more storage mediums storing instructions,
wherein the instructions, when executed by the at least one processor (210) individually or collectively, cause the electronic device (101) to:
based on receiving an input for transmitting a message to a satellite (110), transmit the message through the communication circuitry;
display, on the display, a first visual object (121) to indicate a transmission rate of the message according to elapsed time during a time interval for a reference transmission rate of the message; and
after the time interval, based on receiving, from the satellite through the communication circuitry, an acknowledgment (ACK) signal (1031) for the message, display, on the display, a second visual object (910) to indicate that the message is transmitted, and
wherein the time interval is identified based on an altitude intensity obtained using the sensor of the electronic device with respect to the satellite.

2. The electronic device of claim 1,
wherein, for transmitting the message, the instructions, when executed by the at least one processor individually or collectively, cause the electronic device to:
obtain, using the sensor, an elevation angle (501) of the electronic device with respect to the satellite and an azimuth (725) of the electronic device with respect to the satellite; and
based on identifying, based on the elevation angle and the azimuth, that a relative position (710) of the satellite with respect to the electronic device is within a designated region (730), display a third visual object (122; 720) to indicate that a connection with the satellite is completed; and
wherein the first visual object is displayed after the third visual object is displayed.

3. The electronic device of any one of claims 1 to 2,
wherein, for displaying the first visual object, the instructions, when executed by the at least one processor individually or collectively, cause the electronic device to:
based on receiving information indicating a position of the satellite from the satellite through the communication circuitry, identify a relative position of the satellite with respect to the electronic device; and
change the time interval according to a change in the relative position.

4. The electronic device of any one of claims 1 to 3,
wherein the time interval is identified based on
the number of characters of the message,
an altitude intensity of the electronic device, and
an azimuth intensity of the electronic device with respect to the satellite.

5. The electronic device of any one of claims 1 to 4,
wherein, for displaying the third visual object, the instructions, when executed by the at least one processor individually or collectively, cause the electronic device to:
based on identifying that the relative position of the satellite with respect to the electronic device is within the designated region, identify the altitude intensity corresponding to the elevation angle and the azimuth intensity corresponding to the azimuth.

6. The electronic device of any one of claims 1 to 5,
wherein when the number of characters is a first value, the time interval has a first length;
wherein when the number of characters is a second value greater than the first value, the time interval has a second length, and
wherein the second length is set to be longer than the first length.

7. The electronic device of any one of claims 1 to 6,
wherein when the altitude intensity is a third value, the time interval has a third length;
wherein when the altitude intensity is a fourth value indicating a stronger intensity than the third value, the time interval has a fourth length, and
wherein the fourth length is set to be shorter than the third length.

8. The electronic device of any one of claims 1 to 7,
wherein the first visual object includes a bar type visual object for indicating the transmission rate of the message and a text object indicating that transmission is in progress; and
wherein the second visual object includes the bar type visual object indicating completion of the message transmission and a text object indicating that the message is transmitted.

9. The electronic device of any one of claims 1 to 8,
wherein the time interval is set to a fifth value based on identifying the number of characters of the message; and
wherein the time interval is changed from the fifth value to a sixth value based on the altitude intensity.

10. A method performed by an electronic device (101), the method comprising:
based on receiving an input for transmitting a message to a satellite (110), transmitting the message through communication circuitry (235);
displaying, on a display (220), a first visual object (121) to indicate a transmission rate of the message according to elapsed time during a time interval for a reference transmission rate of the message; and
after the time interval, based on receiving, from the satellite through the communication circuitry, an acknowledgment (ACK) signal (1031) for the message, displaying, on the display, a second visual object (910) to indicate that the message is transmitted, and
wherein the time interval is identified based on an altitude intensity obtained using a sensor (230) of the electronic device with respect to the satellite.

11. The method of claim 10, wherein transmitting the message comprises:
obtaining, using the sensor, an elevation angle (501) of the electronic device with respect to the satellite and an azimuth (725) of the electronic device with respect to the satellite; and
based on identifying, based on the elevation angle and the azimuth, that a relative position (710) of the satellite with respect to the electronic device is within a designated region (730), displaying a third visual object (122; 720) to indicate that a connection with the satellite is completed; and
wherein the first visual object is displayed after the third visual object is displayed.

12. The method of any one of claims 10 to 11, wherein displaying the first visual object comprises:
based on receiving information indicating a position of the satellite from the satellite through the communication circuitry, identifying a relative position of the satellite with respect to the electronic device; and
changing the time interval according to a change in the relative position.

13. The method of any one of claims 10 to 12,
wherein the time interval is identified based on
the number of characters of the message,
an altitude intensity of the electronic device, and
an azimuth intensity of the electronic device with respect to the satellite.

14. The method of any one of claims 10 to 13, wherein displaying the third visual object comprises:
based on identifying that the relative position of the satellite with respect to the electronic device is within the designated region, identifying the altitude intensity corresponding to the elevation angle and the azimuth intensity corresponding to the azimuth.

15. The method of any one of claims 10 to 14, wherein displaying the first visual object on the display comprises:
displaying, in a region adjacent to a fourth visual object (2125) indicating the message, at least one of the first visual object or a fifth visual object (2025) indicating a relative position with respect to the satellite.
